# EUROPÄISCHE PATENTSCHRIFT

(11) **EP 4 061 623 B1**
(45) Veröffentlichungstag und Bekanntmachung des Hinweises auf die Patenterteilung: **03.09.2025**
(21) Anmeldenummer: 20789999.8
(22) Anmeldetag: 15.10.2020
(51) Int. Cl.: B29C 71/00, B29C 64/30, C08J 7/02, B29C 64/188, B29C 64/35, B33Y 40/00

(54) **VORRICHTUNG UND VERFAHREN ZUR BEHANDLUNG EINES FORMARTIKELS AUS KUNSTSTOFF MIT DAMPF EINER BEHANDLUNGSFLÜSSIGKEIT**
DEVICE AND METHOD FOR TREATING A PLASTIC MOLDED ARTICLE WITH VAPOR OF A TREATMENT LIQUID
DISPOSITIF ET PROCÉDÉ DE TRAITEMENT D'UN ARTICLE MOULÉ EN PLASTIQUE AVEC LA VAPEUR D'UN LIQUIDE DE TRAITEMENT

(30) Priorität: 20.11.2019 EP 19210442
(43) Veröffentlichungstag der Anmeldung: 28.09.2022
(73) Patentinhaber: WashTec Holding GmbH, 86153 Augsburg (DE)
(72) Erfinder: SATTLER, Andreas, 81543 München (DE); MAYER, Stefan, 86356 Neusäß (DE)
(74) Vertreter: Winter, Brandl - Partnerschaft mbB
(86) Internationale Anmeldenummer: PCT/EP2020/079113
(87) Internationale Veröffentlichungsnummer: WO 2021/099039

(56) Entgegenhaltungen:
- WO-A1-2018/127683
- WO-A1-2018/235121
- US-A- 4 529 563
- US-A1- 2009 321 972

## Beschreibung

Die vorliegende Anmeldung beansprucht die Priorität der Europäischen Patentanmeldung mit der Anmeldenummer 19210442.0.

### Technisches Gebiet

Die vorliegende Offenbarung betrifft eine Vorrichtung und ein Verfahren zur Behandlung eines Formartikels aus Kunststoff mit Dampf einer Behandlungsflüssigkeit, insbesondere eine Vorrichtung zur automatisierten Behandlung von Kunststoffformartikeln aus additiver Fertigung mit Lösungsmitteldampf und ein Nachbehandlungsverfahren für Kunststoffformartikel aus additiver Fertigung.

Bei der additiven Fertigung wird ein dreidimensionaler Formartikel Schicht für Schicht aus einem Werkstoff aufgebaut, so dass damit auch komplexe Geometrien erzeugt werden können. Bei diesem oft auch als 3D-Druck bezeichneten Fertigungsverfahren wird die gewünschte Geometrie durch schichtweises Hinzufügen, Auftragen und Ablagern von Material gebildet, wobei physikalische oder chemische Härtungs- oder Schmelzprozesse zum Einsatz kommen. Typische Werkstoffe sind beispielsweise Kunststoffe, Keramiken und Metalle.

Die Oberfläche eines auf diese Weise hergestellten Formartikels ist oft relativ rau und ist in der Regel die fertigungsbedingte Schichtstruktur zu erkennen. Wenn eine hohe Oberflächengüte gewünscht ist, um entweder optischen oder funktionalen Anforderungen zu genügen, ist es daher notwendig, die Oberfläche durch eine Nachbearbeitung zu glätten. Meist wird ein mechanisches Nacharbeiten, wie beispielsweise Schleifen, oder ein Lackieren oder eine Kombination von beidem angewendet. Bei einzelnen Polymeren (z.B. ABS) ist auch die Anwendung von Lösungsmitteln bekannt, wobei dabei in der Regel handwerkliche Prozesse mit minimaler Prozesskontrolle und sehr langen Prozesszeiten angewendet werden. So wird das Lösungsmittel entweder auf den zu bearbeitenden Formartikel mittels eines Pinsels aufgetragen oder wird der Formartikel kurzzeitig in das Lösungsmittel eingetaucht. Allerdings ist insbesondere bei komplexen Geometrien und Konturen eine Oberflächenglättung schwierig, da nicht alle Oberflächenpartien gleich gut zugänglich sind.

Bei mittels additiver Fertigung hergestellten Formartikeln aus ABS-Kunststoff, d.h. einem Acrylnitril-Butadien-Styrol-Copolymer, wird zudem ein Verfahren angewendet, bei dem der Formartikel für eine vorgegebene Zeitdauer zusammen mit Aceton in einem abgeschlossenen Raum aufbewahrt wird, ohne dass das flüssige Aceton und der Formartikel in direktem Kontakt miteinander stehen. Aceton ist in der Lage, den ABS-Kunststoff zu lösen oder anzulösen. Aufgrund seiner hohen Flüchtigkeit bereitet sich Aceton auch ohne ein zusätzliches Erwärmen in dem abgeschlossenen Raum aus, kommt dabei mit der Oberfläche des Formartikels in Kontakt und löst den Werkstoff an, wodurch die Oberfläche des Formartikels geglättet wird.

Eine Vorrichtung und ein Verfahren zum Glätten der Oberfläche dreidimensionaler Formartikel aus einem Polymermaterial oder Wachsmaterial ist aus der US 2009 / 0 321 972 A1 bekannt. Die Vorrichtung umfasst ein Gehäuse und darin eine Dampfkammer und eine Trocknungskammer. Die Dampfkammer ist beheizbar, so dass zugeführtes Lösungsmittel verdampft und die Dampfkammer mit Lösungsmitteldampf gefüllt wird. Der Dampf erweicht das Material des Formartikels und glättet die Oberfläche des Formartikels. Im Inneren der Dampfkammer ist im oberen Bereich ferner eine Kühleinrichtung vorgesehen durch die eine obere Begrenzung des Dampfraums realisiert wird. Nach der Behandlung in der Dampfkammer wird der Formartikel zum Trocknen in die von der Dampfkammer getrennte Trockenkammer überführt. Im Inneren des Gehäuses ist im oberen Bereich eine weitere Kühleinrichtung vorgesehen durch die eine obere Begrenzung des Dampfraums im gesamten Gehäuse realisiert wird. Die Behandlung wird solange durchgeführt bis keine Kondensation von Lösungsmitteldampf auf der Oberfläche des Formartikels mehr stattfindet. Dann hat zumindest die Oberfläche des Formartikels die Temperatur des siedenden Lösungsmittels erreicht.

In der US 3 737 499 A und der US 3 807 054 A wird die Behandlung von Kunststoffartikeln mit Lösungsmitteldampf beschrieben, wobei die zu behandelnden Artikel während der Behandlung durch verschiedene Zonen der verwendeten Vorrichtung transportiert werden.

Die WO 2018/ 127 683 A1 offenbart eine Vorrichtung zum Nachbearbeiten eines additiv hergestellten Polymerartikels mit einem Reservoir mit flüssigem Lösungsmittel, einer damit in Fluidverbindung stehenden Bearbeitungskammer, einer Einrichtung zum Erwärmen und Verdampfen des Lösungsmittels und einer Vakuumpumpe zum Absenken des Drucks im Inneren der Bearbeitungskammer. Mittels einer Steuereinheit kann die Bearbeitung entsprechend vordefinierter Bearbeitungsprogramme durchgeführt werden. Während der Bearbeitung wird der Druck im Inneren der Bearbeitungskammer abgesenkt und wird die Temperatur des Polymerartikels geringer als die Temperatur des Lösungsmitteldampfs gehalten. Dazu kann der Polymerartikel selektiv gekühlt werden.

Eine weitere Vorrichtung zur Oberflächenbearbeitung von Formartikeln aus additiver Fertigung und ein entsprechendes Verfahren sind aus der WO 2018/ 235 121 A1 bekannt. In einer hermetisch verschlossenen Behandlungskammer werden der Formartikel und eine Behandlungsflüssigkeit zusammen auf eine Arbeitstemperatur erwärmt die niedriger als die Siedetemperatur der Behandlungsflüssigkeit ist, so dass die Bildung von Kondensat auf der Oberfläche des Formartikels vermieden wird und ermöglicht wird, dass Behandlungsflüssigkeitsdämpfe von der Oberfläche des Formartikels ohne Kondensatbildung absorbiert werden. Dabei wird das Luft/Dampf-Gemisch in der Kammer kontinuierlicher zirkuliert. Die Behandlungskammer weist eine Heizeinrichtung und eine Einrichtung zum Zirkulieren des Luft/Dampf-Gemisches in der Kammer auf. Die Behandlungsdauer reicht von 20 bis 60 Minuten. Der Arbeitsdruck in der Kammer ist gleich dem atmosphärischen Druck plus dem Dampfdruck der Behandlungsflüssigkeit und kann 125 bis 150 kPa betragen. Die Behandlung kann allerdings auch bei einem Arbeitsdruck durchgeführt werden der geringer als der atmosphärische Druck ist.

Zudem werden ein Verfahren und eine Vorrichtung zur Nachbearbeitung von Kunststoffprodukten durch Glätten der Oberfläche mittels Lösungsmitteldampf in der WO 2020/ 007 442 A1, WO 2020/ 007 443 A1 und WO 2020/ 007 444 A1 beschrieben. In einer geschlossenen Kammer wird durch Erwärmen ein Lösungsmittel verdampft, der entstandene Lösungsmitteldampf in der Kammer von unten nach oben zirkuliert, aus der Kammer ausgeleitet und das Lösungsmittel außerhalb der Kammer kondensiert. Die Wände der Kammer können auf eine Temperatur oberhalb des Taupunkt erwärmt werden, um zu verhindern, dass daran Lösungsmittel kondensiert. Die Vorrichtung weist ferner eine Vakuumpumpe auf, um während der Behandlung den Druck in der Kammer um 300 bis 800 mbar abzusenken.

In der US 2009/321972 A1 werden ein System und ein Verfahren zum Glätten der Oberfläche eines dreidimensionalen Körpers beschrieben, der durch Rapid Manufacturing hergestellt wurde. Dazu wird in einer Behandlungskammer ein Lösungsmittel erwärmt und der Körper dem erwärmten Lösungsmitteldampf ausgesetzt wird. Nach der Behandlung wird der Körper in eine Trocknungskammer überführt.

Die WO 2018/127683 A1 offenbart eine Vorrichtung zum Nachbearbeiten der Oberfläche eines durch additive Fertigung hergestellten Polymerkörpers in einer Behandlungskammer, der ein geeignetes Lösungsmittel aus einem Reservoir zugeführt wird, wobei in der Behandlungskammer mittels einer Vakuumpumpe ein Unterdruck erzeugt wird. Hierbei kann das Lösungsmittel erwärmt werden. Zudem kann der zu bearbeitende Körper gekühlt werden, um Lösungsmitteldampf darauf zu kondensieren.

Die WO 2018/235121 A1 offenbart ein Verfahren und eine Vorrichtung zum Bearbeiten der Oberfläche eines durch 3D-Druck hergestellten Körpers. Hierbei wir der zu behandelnde Körper in einer Behandlungskammer, in der flüssiges Lösungsmittel auf eine Temperatur unterhalb des Siedepunkts erwärmt wird, einem Luft/LösungsmittelGemisch ausgesetzt. Dabei wird die Temperatur des zu behandelnden Körpers so gesteuert, dass auf diesem kein Lösungsmittel kondensiert.

In der US 4 529 563 A wird ein Verfahren zur Bearbeitung der Oberfläche eines Körpers aus thermoplastischem Polymer beschrieben, bei dem der zu behandelnde Körper dem Dampf einer azeotropen Lösungsmittelmischung ausgesetzt wird, wobei die Lösungsmittelmischung basierend auf dem Löslichkeitsparameter und der Oberflächenenergie des Polymers und dem Löslichkeitsparameter und der Oberflächenspannung der Lösungsmittel gewählt wird.

Bei den oben beschriebenen Verfahren und Vorrichtungen zur Glättung der Oberfläche ist jedoch die Prozesskontrolle unzureichend, so dass es schwierig ist reproduzierbare Ergebnisse sicherzustellen. Zudem sind in der Regel die Behandlungszeiten zu lange als dass damit deren Einsatz in der industriellen Produktion sinnvoll erscheint. Auch erlauben die bisher bekannten Verfahren der Anwendung von Lösungsmitteldämpfen lediglich die Bearbeitung weniger Werkstoffe.

Werden größere Stückzahlen an mittels additiver Fertigung hergestellter und qualitativ hochwertiger Formartikel benötigt, so ist eine schnelle Nachbearbeitung gefordert bei gleichzeitig guter Reproduzierbarkeit der Bearbeitung. Es besteht daher die Notwendigkeit der Bereitstellung eines diesbezüglich verbesserten Verfahrens und einer Vorrichtung zur automatisierten Behandlung von Kunststoffbauteilen aus additiver Fertigung.

Aufgabe der vorliegenden Erfindung war es daher, ein Verfahren und eine Vorrichtung zur Behandlung eines Formartikels aus Kunststoff bereitzustellen, womit eine schnelle und reproduzierbare Bearbeitung und Glättung der Oberfläche des Formartikels ermöglicht wird.

Die Aufgabe wird gelöst durch eine Vorrichtung gemäß Anspruch 1 und ein Verfahren gemäß Anspruch 9.

Im Speziellen wird eine Vorrichtung zur Behandlung eines Formartikels aus Kunststoff mit Dampf einer Behandlungsflüssigkeit breitgestellt, wobei die Vorrichtung aufweist:
mindestens eine verschließbare und temperierbare Behandlungskammer zur Aufnahme und Behandlung des Formartikels,
mindestens eine Dampferzeugungseinheit zum Bereitstellen von Behandlungsflüssigkeitsdampf, wobei die Dampferzeugungseinheit von der Behandlungskammer räumlich getrennt ist,
mindestens eine absperrbare Fluidverbindung zwischen Behandlungskammer und Dampferzeugungseinheit, welche geeignet ist, der Behandlungskammer Behandlungsflüssigkeitsdampf zuzuführen und Kondensat rückzuführen, und
eine Druckausgleichseinrichtung zur Übergabe von Abluft bei Atmosphärendruck, welche geeignet ist, während der Behandlung einen Druckausgleich mit dem Atmosphärendruck zu ermöglichen, und welche eine Einrichtung zur Rückhaltung von Behandlungsflüssigkeitsdampf aufweist, die geeignet ist das Austreten von Behandlungsflüssigkeitsdampf in die Atmosphäre zu verhindern.

Gemäß einer bevorzugten Ausführungsform weist die Behandlungskammer eine verschließbare Öffnung zum Beschicken der Behandlungskammer mit dem zu behandelnden Formartikel, mindestens einen Einlass und mindestens einen Auslass für Behandlungsflüssigkeitsdampf, einen Auslass für kondensierte Behandlungsflüssigkeit und eine Heizeinrichtung und eine Kühleinrichtung zum Temperieren des Inneren der Behandlungskammer auf.

Vorzugsweise weist die Behandlungskammer zudem einen Einlass für ein Spülgas auf.

Die Dampferzeugungseinheit weist ferner vorzugsweise einen Behälter zum Vorhalten der Behandlungsflüssigkeit, eine Heizeinrichtung zum Erwärmen der Behandlungsflüssigkeit auf deren Siedetemperatur, eine Druckerhöhungseinrichtung zum Erhöhen des Drucks des Behandlungsflüssigkeitsdampfs um einen vorgegebenen Druck und eine Kühleinrichtung zum Kondensieren von überschüssigem Behandlungsflüssigkeitsdampf auf.

Vorzugsweise umfasst die mindestens eine absperrbare Fluidverbindung Einrichtungen zum Zuführen des Behandlungsflüssigkeitsdampfs von der Dampferzeugungseinheit zu der Behandlungskammer, zum Rückführen von Behandlungsflüssigkeitsdampf aus der Behandlungskammer zu der Dampferzeugungseinheit und zum Rückführen von kondensierter Behandlungsflüssigkeit aus der Behandlungskammer zu der Dampferzeugungseinheit auf, wobei die Einrichtungen zum Zuführen und Rückführen Absperreinrichtungen aufweisen.

Die mindestens eine absperrbare Fluidverbindung umfasst vorzugsweise ferner eine Einrichtung zum Zuführen von Spülgas zu der Behandlungskammer auf.

Die erfindungsgemäße Vorrichtung weist ferner vorzugsweise eine Steuereinheit zum Steuern der Ströme an Behandlungsflüssigkeitsdampf zwischen Behandlungskammer und Dampferzeugungseinheit, der Rückführung von kondensierter Behandlungsflüssigkeit aus der Behandlungskammer zu der Dampferzeugungseinheit, der Heizeinrichtung der Dampferzeugungseinheit und der Temperatur im Inneren der Behandlungskammer auf.

Vorzugsweise ist die Steuereinheit auch ausgelegt, die Zufuhr von Spülgas zu der Behandlungskammer zu steuern.

Die erfindungsgemäße Vorrichtung weist ferner vorzugsweise eine Bedieneinheit zum Auswählen oder Einstellen relevanter Parameter für die Behandlung des Formartikels auf.

Gemäß der vorliegenden Erfindung wird ferner ein Verfahren zur Behandlung eines Formartikels aus Kunststoff bereitgestellt, mit den Schritten
a) Erzeugen einer Dampfphase durch Erwärmen einer Behandlungsflüssigkeit bis zu deren Siedepunkt, wobei die Behandlungsflüssigkeit mindestens ein Lösungsmittel umfasst, das in der Lage ist, den Kunststoff zu lösen oder anzulösen,
b) Behandlungsschritt bei dem der zu behandelnde Formartikel der im Schritt a) erzeugten Dampfphase für eine vorgegebene Behandlungszeit ausgesetzt wird indem vorzugsweise der erzeugte Behandlungsflüssigkeitsdampf dem Formartikel zugeführt wird und
c) Entfernen des Formartikels aus der Dampfphase und Entfernen von auf der Oberfläche des behandelten Formartikels vorhandener restlicher Behandlungsflüssigkeit,
wobei während der Behandlung ein Druckausgleich mit dem Atmosphärendruck gegeben ist und verhindert wird, dass Behandlungsflüssigkeitsdampf in die Atmosphäre gelangt.

Das erfindungsgemäße Verfahren wird vorzugsweise unter Verwendung der erfindungsgemäßen Vorrichtung durchgeführt. Somit gelten die nachfolgend in Bezug auf das erfindungsgemäße Verfahren angegebenen Maßnahmen und Merkmale auch für die erfindungsgemäße Vorrichtung und gelten die nachfolgend in Bezug auf die erfindungsgemäße Vorrichtung angegebenen Maßnahmen und Merkmale auch für das erfindungsgemäße Verfahren.

Bei dem erfindungsgemäßen Verfahren wird vorzugsweise die Behandlung des Formartikels in einer Behandlungskammer einer geeigneten Vorrichtung durchgeführt, wobei die im Schritt a) erzeugte Dampfphase der Behandlungskammer von außen zugeführt wird, und werden auch die Schritte b) und c) in derselben Behandlungskammer durchgeführt. Dadurch kann vermieden werden, den Formartikel zu transportieren bevor die gesamte Behandlung abgeschlossen ist, um sicherzustellen, dass die behandelte Oberfläche des Formartikels keine Beschädigung erfährt. Die erfindungsgemäße Vorrichtung verfügt dazu vorzugsweise in der Behandlungskammer über eine Einrichtung zum Positionieren des Formartikels während der gesamten Behandlung.

Die Behandlungskammer der erfindungsgemäßen Vorrichtung weist vorzugsweise eine verschließbare Öffnung auf, vorzugsweise eine Tür oder eine Klappe, die zum Beschicken der Behandlungskammer mit dem zu behandelnden Formartikel und zur Entnahme des bearbeiteten Formartikels geöffnet werden kann. Während der Behandlung ist die Öffnung verschlossen und aus Sicherheitsgründen vorzugsweise verriegelt. Vorteilhafterweise ist die Behandlungskammer hermetisch abgedichtet, so dass keine Behandlungsflüssigkeitsdämpfe unkontrolliert entweichen können. Vorzugsweise ist die Behandlungskammer thermisch isoliert. Sie weist mindestens einen Einlass für Behandlungsflüssigkeitsdampf auf der vorzugsweise derart angeordnet und ausgestaltet ist, dass sich der Behandlungsflüssigkeitsdampf gleichmäßig in der Kammer verteilen kann. In einer bevorzugten Ausführungsform ist in der Behandlungskammer eine Verteileinrichtung zum Verteilen des von der Dampferzeugungseinheit zugeführten Dampfs im Inneren der Behandlungskammer vorgesehen.

Die Behandlungskammer weist ferner vorzugsweise mindestens einen Auslass für Behandlungsflüssigkeitsdampf auf, durch den während der Behandlung Behandlungsflüssigkeitsdampf zu der Dampferzeugungseinheit rückgeführt werden kann.

Da während der Behandlung dampfförmige Behandlungsflüssigkeit an verschiedenen Oberflächen in der Kammer kondensieren kann, kann es vorkommen, dass sich Behandlungsflüssigkeit im unteren Teil der Behandlungskammer ansammelt. Diese kann durch den in der Behandlungskammer vorhandenen Auslass für kondensierte Behandlungsflüssigkeit, der vorzugsweise als ein Gefälle ausgestaltet ist, ausgeleitet und zur Dampferzeugungseinheit rückgeführt werden. Um Feststoffe zurückzuhalten, kann ein Filter oder ein Sieb vor dem Auslass für kondensierte Behandlungsflüssigkeit angeordnet werden.

Die erfindungsgemäße Vorrichtung weist ferner eine Einrichtung zur Rückhaltung von Behandlungsflüssigkeitsdampf auf, die geeignet ist das Austreten von Behandlungsflüssigkeitsdampf in die Atmosphäre zu verhindern. Diese kann beispielsweise als eine außerhalb der Behandlungskammer vorgesehene Kühleinrichtung ausgestaltet sein, der der aus der Behandlungskammer austretende bzw. ausgeleitete Behandlungsflüssigkeitsdampf zugeführt wird. Die mittels der Kühleinrichtung kondensierte Behandlungsflüssigkeit kann zur erneuten Verwendung in der erfindungsgemäßen Vorrichtung eingesetzt werden. Die Kühleinrichtung kann als Komponente der Dampferzeugungseinheit ausgestaltet sein.

Die erfindungsgemäße Vorrichtung weist ferner eine Einrichtung zum Druckausgleich auf Diese kann Bestandteil der Dampferzeugungseinheit sein. Die Druckausgleichseinrichtung ist über geeignete Leitungen mit der Behandlungskammer und der Atmosphäre verbunden. Über die Druckausgleichseinrichtung findet ein Druckausgleich mit dem Atmosphärendruck statt und kann Abluft bei Atmosphärendruck nach Außen abgegeben werden. Der Druckausgleichseinrichtung kann ein Abluftsystem nachgeschaltet sein, um die Abluft geeignet ableiten zu können.

Zudem weist die Behandlungskammer vorzugsweise einen Einlass für ein Spülgas auf durch den ein vorzugsweise inertes Gas, wie beispielsweise Argon oder Stickstoff, eingeleitet werden kann, um nach der Behandlung restlichen Behandlungsflüssigkeitsdampf aus der Behandlungskammer zu der Dampferzeugungseinheit zu spülen. Dadurch kann verhindert werden, dass sich eine explosionsfähige Atmosphäre im Inneren der Behandlungskammer bildet und kann vor allem eine schnelle Beendigung der Oberflächenbehandlung erreicht werden.

Zum Temperieren des Inneren der Behandlungskammer kann eine Heizeinrichtung und eine Kühleinrichtung vorgesehen sein. Damit kann die Temperatur während der Behandlung im Inneren der Behandlungskammer reguliert werden und können darüber hinaus in einem Vorbehandlungsschritt die Kammer und der zu behandelnde Formartikel auf eine definierte Anfangstemperatur erwärmt werden bevor Behandlungsflüssigkeitsdampf eingeleitet wird. Mit der Kühleinrichtung kann zudem nach dem eigentlichen Behandlungsschritt der Formartikel entsprechend einem definierten Abkühlprozess abgekühlt werden bevor der Formartikel aus der Behandlungskammer entnommen wird. Dadurch lassen sich die gewünschten Oberflächenzustände gezielter und reproduzierbarer realisieren.

In der Dampferzeugungseinheit wird mittels einer Heizeinrichtung Behandlungsflüssigkeit auf deren Siedetemperatur erwärmt, um diese zu verdampfen. Zu diesem Zweck wird Behandlungsflüssigkeit in einem Behälter vorgehalten und wird die Behandlungsflüssigkeit mit der Heizeinrichtung in Kontakt gebracht. Beispielsweise kann der gesamte Behälter bzw. die darin vorgehaltene gesamte Behandlungsflüssigkeit bis zu deren Siedepunkt erwärmt werden oder kann Behandlungsflüssigkeit dosiert einer als Verdampfer ausgeführten Heizeinrichtung zugeführt werden.

Dadurch, dass die verwendete Behandlungsflüssigkeit bis zu deren Siedepunkt erwärmt wird, wird zum einen eine größere Menge an Lösungsmittel in die Dampfphase überführt und wird zum anderen eine hinsichtlich Temperatur und Zusammensetzung gleichbleibende und reproduzierbare Dampfphase erzeugt. Dies ermöglicht kürzere Behandlungszeiten und reproduzierbarere Ergebnisse. Ferner können damit auch Lösungsmittel eingesetzt werden, die aufgrund ihrer bei Raumtemperatur geringen Flüchtigkeit ansonsten als ungeeignet erscheinen.

Durch geeignete Wahl der Behandlungszeit kann das Ausmaß von beispielsweise einer Glättung der Oberfläche gezielt gesteuert werden. Darauf basierend können reproduzierbare Ergebnisse realisiert werden, was das erfindungsgemäße Verfahren auch für den industriellen Einsatz geeignet macht. Mit der erfindungsgemäßen Vorrichtung kann in sehr kurzer Zeit zwischen den einzelnen Verfahrensschritten gewechselt werden. Da die Dampferzeugungseinheit eine ausreichende Menge an Behandlungsflüssigkeitsdampf bereithält, kann die Behandlungskammer in kürzester Zeit mit dem Dampf geflutet werden. Nach Ablauf der vorgegebenen Behandlungszeit kann durch Einleiten von Spülgas die Behandlung in kürzester Zeit gestoppt werden. So lassen sich kurze Behandlungszeiten im Behandlungsflüssigkeitsdampf realisieren, können große Stückzahlen an Formartikeln in kürzerer Zeit behandelt werden und lassen sich reproduzierbare Ergebnisse erzielen.

Der durch das Verdampfen der Behandlungsflüssigkeit erzeugte Behandlungsflüssigkeitsdampf stellt eine Atmosphäre oder ein Gasraum dar, der vollständig oder zumindest hauptsächlich aus dampfförmiger, d.h. gasförmiger, Behandlungsflüssigkeit besteht. Die Behandlungsflüssigkeit umfasst mindestens ein Lösungsmittel, das in der Lage ist, den Kunststoff zu lösen oder anzulösen. Lösungsmittel im Sinne der vorliegenden Anmeldung sind alle Flüssigkeiten, die in der Lage sind, den Kunststoff, aus dem der zu behandelnde Formartikel hergestellt ist, zu lösen oder anzulösen, ohne dass es dabei zu chemischen Reaktionen zwischen Lösungsmittel und Kunststoff kommt. Dazu gehören beispielsweise organische Lösungsmittel, wie aliphatische Kohlenwasserstoffe, aromatische Kohlenwasserstoffe, Ketone und Ester, die substituiert oder nicht substituiert sein können, sowie anorganische und organische Säuren und deren wässrige Lösungen, wie beispielsweise Ameisensäure oder Essigsäure. Die substituierten Kohlenwasserstoffe können beispielsweise halogenierte Kohlenwasserstoffe, insbesondere Chloroform, sein.

Der Kunststoff, aus dem der zu behandelnde Formartikel hergestellt ist, ist lediglich dadurch beschränkt, dass eine Behandlungsflüssigkeit zugänglich ist, die diesen Kunststoff lösen oder anlösen kann, insbesondere bei einer Temperatur im Bereich des Siedepunkts der Behandlungsflüssigkeit.

Der Kunststoff ist vorzugsweise ein thermoplastischer Kunststoff. Im Speziellen kann der zu behandelnde Formartikel aus einem Kunststoff hergestellt sein, der ausgewählt ist aus thermoplastischen Kunststoffen, wie Acrylnitril-Butadien-Styrol-Copolymer (ABS), Polypropylen (PP), Polycarbonat (PC), Polylactid (PLA), Polyamid (PA), Polyethylenterephthalat (PET) und Polystyrol (PS).

Geeignete Kombinationen aus Kunststoff und Lösungsmittel sind beispielsweise:
ABS + Keton (bspw. Aceton, Methylethylketon (MEK), Methylisobutylketon (MIBK));
PP + Aliphaten oder Aromaten (Bspw. Benzol, Toluol, Xylol);
PC + Keton (bspw. Aceton, Methylethylketon (MEK), Methylisobutylketon (MIBK));
PC + Chloroform;
PLA + Tetrahydrofuran (THF) oder Dioxan; und
Polyamid 6 (PA6) + Ameisensäure oder Essigsäure.

Die zu verwendende Behandlungsflüssigkeit kann aus lediglich einem einzelnen Lösungsmittel bestehen. Alternativ kann die Behandlungsflüssigkeit eine Mischung aus zwei oder mehr Lösungsmitteln sein oder kann eine Mischung sein, die neben dem mindestens einen Lösungsmittel eine weitere Flüssigkeit umfasst, wobei die weitere Flüssigkeit den Kunststoff nicht lösen oder anlösen kann.

Gemäß einer speziellen Ausführungsform umfasst die Behandlungsflüssigkeit zusätzlich zu dem mindestens einen Lösungsmittel mindestens ein weiteres Lösungsmittel und/oder eine andere Flüssigkeit und bildet die Behandlungsflüssigkeit ein azeotropes Gemisch. Ein azeotropes Gemisch, auch Azeotrop genannt, ist eine aus zwei oder mehr chemischen Verbindungen bestehende Flüssigkeit, deren Gleichgewichtsdampfphase dieselbe Zusammensetzung aufweist wie die flüssige Phase und das somit einen konstanten Siedepunkt aufweist.

Der Vorteil der Verwendung von azeotropen Gemischen liegt zum einen darin, dass damit die Siedetemperatur der Behandlungsflüssigkeit und damit auch die Temperatur, bei der der Formartikel behandelt wird, variiert werden kann, was bei gegebenen Kombinationen aus Kunststoff und Lösungsmittel ansonsten nur über eine apparativ aufwendige Druckregelung in der Behandlungskammer realisiert werden kann. Zum anderen können die Löseeigenschaften der Behandlungsflüssigkeit in Bezug auf den Kunststoff, aus dem der zu behandelnde Formartikel hergestellt ist, gezielt beeinflusst werden.

Dies kann vorteilhaft sein, wenn beispielsweise ein Lösungsmittel, das aufgrund seiner Löseeigenschaften zur Behandlung eines aus einem Kunststoff hergestellten Formartikels prinzipiell geeignet ist, einen Siedepunkt aufweist, der so hoch ist, dass aufgrund eines sehr schnellen Anlösens der Oberfläche des Formartikels, d.h. einer sehr hohen Lösungsgeschwindigkeit, eine zufriedenstellende und reproduzierbare Prozesskontrolle nicht möglich ist. Wird anstelle des reinen Lösungsmittels ein azeotropes Gemisch mit niedrigerem Siedepunkt verwendet, so kann der Prozess des Anlösens und Glätten der Oberfläche verlangsamt und dadurch besser kontrolliert werden.

Dabei kann die Lösungsgeschwindigkeit zum einen dadurch verringert werden, dass allein durch die Herabsetzung der Siedetemperatur der Vorgang des Anlösens der Oberfläche des Formartikels langsamer abläuft. Zusätzlich kann durch das Verdünnen des Lösungsmittels ebenfalls eine Verringerung der Lösungsgeschwindigkeit bewirkt werden.

Die Erfinder der vorliegenden Erfindung haben herausgefunden, dass bei höheren Temperaturen unerwünschte Deformation des Formartikels auftreten können, die auf zum Teil gänzlich lösemittelunabhängige Schmelz- oder Erweichungseffekte des Polymers zurückzuführen sind. Diese können durch die Verwendung eines azeotropen Gemisches vermieden werden, da damit die Temperatur während der Behandlung gesenkt werden kann.

Die Verwendung eines azeotropen Gemisches kann ferner in den Fällen von Vorteil sein, in denen der Siedepunkt des Lösungsmittels so hoch ist, dass der Kunststoff bei dieser Temperatur zu schmelzen oder zu erweichen beginnt. Durch Verwenden eines azeotropen Gemisches, das einen niedrigeren Siedepunkt als das reine Lösungsmittel aufweist, kann dies verhindert werden.

So kann bei der Behandlung von Polypropylen (PP) mit Toluol, die Siedetemperatur des Toluols zu hoch sein, um ein gutes Ergebnis zu erreichen. Die Verwendung eines azeotropen Gemisches aus Toluol/Essigsäure mit 72 Gew.% Toluol und 28 Gew.% Essigsäure verringert die Temperatur der Dampfphase um ca. 10 °C und verlangsamt somit den Prozess.

Es ist bevorzugt, dass der Siedepunkt der Behandlungsflüssigkeit unterhalb des Erweichungspunkts des Kunststoffs liegt, aus dem der zu behandelnde Formartikel hergestellt ist. Dadurch kann verhindert werden, dass durch Wärmeübertragung von der Dampfphase auf den Formartikel die Oberfläche des Formartikels bis zum Erweichungspunkt des Kunststoffs erwärmt wird und der Formartikel oberflächlich zu schmelzen oder erweichen beginnt. Dadurch wäre die Prozesskontrolle deutlich erschwert.

Als Erweichungspunkt wird hierbei die Temperatur angesehen, bei der der Kunststoff, aus dem der Formartikel besteht, beginnt sich allein aufgrund der Schwerkraft zu verformen.

Die Dampferzeugungseinheit weist ferner eine Druckerhöhungseinrichtung auf mittels der der Druck des erzeugten Behandlungsflüssigkeitsdampfs um einen vorgegebenen Druck erhöht wird, der ausreichend ist, um den Behandlungsflüssigkeitsdampf der Behandlungskammer zuführen zu können. Durch den Überdruck in der Dampferzeugungseinheit kann der erzeugte Behandlungsflüssigkeitsdampf der Behandlungskammer zugeführt werden ohne dass dazu eine Pumpe benötigt wird. Die von der Druckerhöhungseinrichtung erzeugte Druckerhöhung liegt vorzugsweise bei 5 mbar oder mehr, weiter bevorzugt bei 10 mbar oder mehr und beträgt vorzugsweise 200 mbar oder weniger, weiter bevorzugt 100 mbar oder weniger, besonders bevorzugt 80 mbar oder weniger und noch weiter bevorzugt 60 mbar oder weniger.

Der durch die Druckerhöhungseinrichtung erzeugte Überdruck des Behandlungsflüssigkeitsdampfs dient allein dem einfacheren Zuführen des in der Dampferzeugungseinheit erzeugten Behandlungsflüssigkeitsdampfs zu der Behandlungskammer. Dadurch wird der Druck in der Behandlungskammer und damit auch während der Behandlung nicht oder in nicht nennenswertem Maße erhöht, da über die Druckausgleichseinrichtung ein Druckausgleich mit dem Atmosphärendruck besteht.

In der Dampferzeugungseinheit ist zudem eine Kühleinrichtung zum Kondensieren von überschüssigem Behandlungsflüssigkeitsdampf vorgesehen. Vorzugsweise ist die Kühleinrichtung, die beispielsweise als ein Schlangenkühler ausgestaltet sein kann, im oberen Bereich der Dampferzeugungseinheit angeordnet, so dass Behandlungsflüssigkeitsdampf, der nicht der Behandlungskammer zugeführt wird, wieder kondensiert wird und nicht nach Außen gelangen kann. Der Behandlungsflüssigkeitsdampf, der von der Behandlungskammer wieder zur Dampferzeugungseinheit rückgeführt wird, wird vorzugsweise der Kühleinrichtung zugeführt und dort kondensiert.

Die Dampferzeugungseinheit weist ferner Einrichtungen zum Befüllen und Entleeren auf, um Behandlungsflüssigkeit in die Dampferzeugungseinheit einzufüllen und diese, wenn notwendig, entnehmen zu können.

Vorzugsweise ist die Dampferzeugungseinheit nach Außen thermisch Isoliert.

Zum Leiten der Ströme an Behandlungsflüssigkeit und Behandlungsflüssigkeitsdampf weist die erfindungsgemäße Vorrichtung Einrichtungen zum Zuführen des Behandlungsflüssigkeitsdampfs von der Dampferzeugungseinheit zu der Behandlungskammer, zum Rückführen von Behandlungsflüssigkeitsdampf aus der Behandlungskammer zu der Dampferzeugungseinheit, zum Rückführen von kondensierter Behandlungsflüssigkeit aus der Behandlungskammer zu der Dampferzeugungseinheit und zum Zuführen von Spülgas zu der Behandlungskammer auf. Dies sind vorzugsweise geeignete Rohrleitungen oder Schläuche, die aus einem Material gefertigt sind, das gegenüber der Behandlungsflüssigkeit und erhöhten Temperaturen beständig ist.

Die Einrichtungen zum Zuführen und Rückführen weisen ferner Absperreinrichtungen wie Ventile, beispielsweise Absperrventile oder Mehrwegventile, auf, die vorzugsweise mittels einer Steuereinrichtung steuerbar sind.

Die erfindungsgemäße Vorrichtung weist zudem eine Steuereinheit auf. Mittels der Steuereinheit können die Materialströme in der Vorrichtung gesteuert werden, wie die Ströme an Behandlungsflüssigkeitsdampf zwischen Behandlungskammer und Dampferzeugungseinheit, die Rückführung von kondensierter Behandlungsflüssigkeit aus der Behandlungskammer zu der Dampferzeugungseinheit und die Zufuhr von Spülgas zur Behandlungskammer. Ferner können mittels der Steuereinheit die Heizeinrichtung der Dampferzeugungseinheit und über die Heiz- und Kühleinrichtungen in der Behandlungskammer die Temperatur im Inneren der Behandlungskammer gesteuert werden.

Die Steuereinheit ist vorzugsweise eine elektrische Steuereinheit wie beispielsweise ein programmierbarer Mikrocomputer.

Die oben genannte Steuerung umfasst auch ein Regulieren der genannten Parameter und Komponenten. Zu diesem Zweck weist die erfindungsgemäße Vorrichtung vorzugsweise ferner einen oder mehrere Sensoren auf, die verschiedene Parameter der Vorrichtung erfassen und an die Steuereinheit übermitteln. Die Sensoren können Sensoren sein zum Erfassen der Temperatur der Behandlungsflüssigkeit in der Dampferzeugungseinheit, zum Erfassen des Füllstands der Behandlungsflüssigkeit in der Dampferzeugungseinheit, zum Erfassen der Temperatur und des Drucks des von der Dampferzeugungseinheit der Behandlungskammer zugeführten Behandlungsflüssigkeitsdampfs und zum Erfassen der Temperatur und des Sauerstoffgehalts im Inneren der Behandlungskammer.

Die erfindungsgemäße Vorrichtung weist zudem eine Bedieneinheit zum Auswählen oder Einstellen relevanter Parameter für die Behandlung des Formartikels auf. Diese Parameter umfassen vorzugsweise den Volumenstrom an der Behandlungskammer zugeführtem Behandlungsflüssigkeitsdampf, die Temperatur im Inneren der Behandlungskammer, die Zeitdauer der Behandlung oder einzelner Behandlungsschritte und vordefinierte Kombinationen dieser Parameter. Die vordefinierten Parameterkombinationen können in der Form definierter Behandlungsprogramme in der Steuereinheit abgelegt sein und können vom Benutzer der Vorrichtung an der Bedieneinheit ausgewählt werden.

Gemäß einer bevorzugten Ausführungsform ist die Steuereinheit angepasst zum
- Steuern während eines Vorbehandlungsschrittes der Temperatur im Inneren der Behandlungskammer, um den zu behandelnden Formkörper auf eine Anfangstemperatur zu bringen, die höher als die Raumtemperatur ist,
- Steuern während eines Behandlungsschrittes, der auf den Vorbehandlungsschritt folgt, der Temperatur im Inneren der Behandlungskammer, der Ströme an Behandlungsflüssigkeitsdampf zwischen Behandlungskammer und Dampferzeugungseinheit und der Zeitdauer des Behandlungsschrittes, und
- Steuern während eines Nachbehandlungsschrittes, der auf den Behandlungsschritt folgt, der Temperatur im Inneren der Behandlungskammer und der Zufuhr von Spülgas zur Behandlungskammer.

Es hat sich gezeigt, dass besonders vorteilhafte und gut reproduzierbare Ergebnisse erhalten werden, wenn der zu behandelnde Formartikel vor und nach der eigentlichen Behandlung mit Behandlungsflüssigkeitsdampf einer Vorbehandlung bzw. Nachbehandlung unterzogen wird.

Indem in einem Vorbehandlungsschritt die Temperatur im Inneren der Behandlungskammer und damit auch die Temperatur des zu behandelnden Formkörper auf eine vordefinierte Anfangstemperatur gebracht wird, die höher als die Raumtemperatur ist, kann die Temperaturdifferenz zwischen der Oberfläche des Formartikels und dem zugeführten Behandlungsflüssigkeitsdampf festgelegt werden, was wiederum den Grad der Kondensation von Behandlungsflüssigkeit auf der Oberfläche des Formartikels beeinflusst. Damit kann beispielsweise gesteuert werden, ob sich ein gleichmäßiger Film aus Behandlungsflüssigkeit auf der Oberfläche des Formartikels bildet und kann auch die Dicke des gebildeten Behandlungsflüssigkeitsfilms beeinflusst werden. Somit kann beispielsweise verhindert werden, dass sich Flüssigkeitstropfen bilden, die nach untern ablaufen und dadurch ein ungleichmäßiges Ergebnis der Glättung der Oberfläche bewirken.

Die Temperatur auf die der Formartikel im Vorbehandlungsschritt erwärmt wird ist höher als die Raumtemperatur und ist in der Regel geringer als der Siedepunkt der Behandlungsflüssigkeit. In einer speziellen Ausführungsform kann die Temperatur so gesteuert werden, dass sie höher als der Siedepunkt der Behandlungsflüssigkeit ist, wodurch verhindert wird, dass Behandlungsflüssigkeit auf der Oberfläche des Formartikels auskondensiert. In diesem Fall wird die Behandlungsflüssigkeit lediglich durch Absorptionsprozesse in die Oberfläche des Formartikels eingebracht. Der Vorteil dieser Ausführungsform liegt darin, dass ein langsameres und damit besser kontrollierbares Anlösen der Oberfläche des Formartikels möglich wird, was vor allem bei Formartikeln mit fein strukturierten Oberflächen eine schonendere Glättung ermöglicht. Zudem wird vermieden, dass kondensierende Behandlungsflüssigkeit entlang der Oberfläche des Formartikels nach unten läuft wodurch die Behandlung bzw. Glättung der Oberfläche ungleichmäßig werden könnte.

Im Vorbehandlungsschritt, d.h. während der Vorbehandlung oder bereits bevor die Vorbehandlung beginnt, kann der Behandlungskammer Spülgas zugeführt werden, um sicherzustellen, dass sich keine explosionsfähige Atmosphäre im Inneren der Behandlungskammer bildet.

Es hat sich ferner gezeigt, dass bessere und reproduzierbarere Ergebnisse erhalten werden, wenn der Formartikel nach der eigentlichen Behandlung mit Behandlungsflüssigkeitsdampf einer Nachbehandlung unterzogen wird. In einem entsprechenden Nachbehandlungsschritt wird die Temperatur im Inneren der Behandlungskammer entsprechend einem vordefinierten Programm verringert.

Da sowohl im Vorbehandlungsschritt wie auch im Nachbehandlungsschritt der Behandlungskammer Spülgas zugeführt werden kann, ist die Steuereinheit vorzugsweise angepasst, die Zufuhr des Spülgases zu der Behandlungskammer im Vorbehandlungsschritt und im Nachbehandlungsschritt zu steuern.

Die Behandlungskammer der erfindungsgemäßen Vorrichtung weist ferner vorzugsweise eine Einrichtung zum Umwälzen des Gases im Inneren der Behandlungskammer, vorzugsweise einen Ventilator, auf, um eine möglichst gleichmäßigen Kontakt der gesamten Oberfläche des Formartikels mit dem Behandlungsflüssigkeitsdampf zu gewährleisten. Da die Behandlungsflüssigkeiten in der Regel entzündliche Flüssigkeiten sind ist es vorteilhaft, den Antrieb eines Ventilators außerhalb der Behandlungskammer anzuordnen und den Ventilator über eine magnetische Kopplung anzutreiben.

Die erfindungsgemäße Vorrichtung weist ferner vorzugsweise eine Druckreguliereinrichtung auf zur Regulierung des Drucks, mit dem die Dampferzeugungseinheit den Behandlungsflüssigkeitsdampf bereitstellt. Damit können ein gleichmäßiger Strom an Behandlungsflüssigkeitsdampf zu der Behandlungskammer und dadurch eine gleichmäßige und reproduzierbare Behandlung des Formartikels sichergestellt werden.

In einer bevorzugten Ausführungsform der erfindungsgemäßen Vorrichtung findet in den Heizeinrichtungen und Kühleinrichtungen die Wärmeübertragung mittels flüssiger Übertragungsmedien statt. Diese Übertragungsmedien können geeignete Wärmeübertragungsmedien und Kälteübertragungsmedien sein, wie beispielsweise temperaturbeständige Silikon-, Paraffin- oder Glycolöle oder auch Wasser. Zu diesem Zweck kann die erfindungsgemäße Vorrichtung eine Versorgungseinrichtung zum Versorgen der Heizeinrichtungen mit einem Wärmeübertragungsmedium und zum Versorgen der Kühleinrichtungen mit einem Kälteübertragungsmedium aufweisen.

Die Übertragungsmedien werden vorzugsweise mittels Pumpen in einem Kreislauf geführt, wobei der Kreislauf vorzugsweise ferner ein Reservoir für das Wärmeübertragungsmedium bzw. Kälteübertragungsmedium aufweist.

Aus Sicherheitsgründen wird die Temperatur des Wärmeübertragungsmediums vorzugsweise so eingestellt, dass sie geringer als der Zündpunkt der verwendeten Behandlungsflüssigkeit ist, vorzugsweise auf mindestens 10 °C, weiter bevorzugt mindestens 20 °C unterhalb des Zündpunkts.

Die Temperatur des Kälteübertragungsmediums wird vorzugsweise so eingestellt, dass sie über dem Gefrierpunkt der verwendeten Behandlungsflüssigkeit liegt, vorzugsweise auf mindestens 10 °C, weiter bevorzugt mindestens 20 °C oberhalb des Gefrierpunkts.

In einer weiteren bevorzugten Ausführungsform ist zwischen den beiden Kreisläufen, d.h. dem Kreislauf des Wärmeübertragungsmediums und dem Kreislauf des Kälteübertragungsmediums, eine Wärmepumpe vorgesehen, so dass der Energieverbrauch der erfindungsgemäßen Vorrichtung geringgehalten werden kann.

Die Komponenten und Oberflächen der erfindungsgemäßen Vorrichtung, die in Kontakt mit der Behandlungsflüssigkeit oder dem Behandlungsflüssigkeitsdampf kommen können, sind vorzugsweise aus einem Material hergestellt, das gegenüber der Behandlungsflüssigkeit und hohen Temperaturen von vorzugsweise bis zu mindestens 200 °C beständig ist. Geeignete Materialien können Edelstahl, Glas, Keramik aber auch spezielle Kunststoffe wie PTFE-Compounds sein.

Mit der erfindungsgemäßen Vorrichtung kann eine verbesserte Prozesssicherheit erreicht werden und sind keine manuellen Eingriffe mehr notwendig, wie beispielsweise das Entnehmen des zu behandelnden Formartikels aus einer Behandlungskammer, um ihn in einer separaten Trocknungseinrichtung zu trockenen. Da durch die Steuereinheit in Verbindung mit der Bedieneinheit die relevanten Parameter für die Behandlung, insbesondere auch vordefinierte Behandlungsprogramme, eingestellt oder ausgewählt werden können, kann die Behandlung von einem breiteren Personenkreis durchgeführt werden und es sind zudem auch komplexere Verfahrensführungen möglich. Durch die Rückführung von kondensierter Behandlungsflüssigkeit und Behandlungsflüssigkeitsdampf innerhalb der Vorrichtung zu der Dampferzeugungseinheit kann zudem der Verbrauch an Behandlungsflüssigkeit verringert werden.

Bei dem erfindungsgemäßen Verfahren bedeutet das Erzeugen der Dampfphase im Schritt a), dass durch das Erwärmen der Behandlungsflüssigkeit diese in einem Maße verdampft, dass eine Atmosphäre oder ein Gasraum entsteht, der hauptsächlich aus dampfförmiger, d.h. gasförmiger, Behandlungsflüssigkeit, d.h. aus Behandlungsflüssigkeitsdampf, besteht.

Das Aussetzen des zu behandelnden Formartikels der im Schritt a) erzeugten Dampfphase bedeutet, dass der Formartikel dabei entweder vollständig von der erzeugten Dampfphase umgeben ist oder dass lediglich ein definierter Teil des Formartikels der Dampfphase ausgesetzt wird, d.h. mit ihr in Kontakt kommt. Dabei kann entweder der Formartikel in die erzeugte Dampfphase eingebracht werden oder kann die erzeugte Dampfphase, d.h. aus Behandlungsflüssigkeitsdampf, dem Formartikel zugeführt werden.

Wird der im Schritt a) erzeugte Behandlungsflüssigkeitsdampf dem Formartikel zugeführt, beispielsweise indem der Formartikel in der Behandlungskammer der erfindungsgemäßen Vorrichtung platziert und der in der Dampferzeugungseinheit erzeugte Behandlungsflüssigkeitsdampf in die Behandlungskammer eingeleitet wird, so kann das im Schritt c) durchgeführte Entfernen des Formartikels aus der Dampfphase realisiert wird durch Beenden der Zufuhr des Behandlungsflüssigkeitsdampfs zu dem Formartikel, vorzugsweise unterstützt durch Einleiten eines Spülgases, um den noch vorhandenen Behandlungsflüssigkeitsdampf zu verdrängen. Zudem kann die Behandlungskammer mittels der Kühleinrichtung der Behandlungskammer gekühlt werden, so dass enthaltener Behandlungsflüssigkeitsdampf auskondensiert.

Gemäß einer bevorzugten Ausführungsform kann das in Schritt c) durchgeführte Entfernen von auf der Oberfläche des behandelten Formartikels vorhandener restlicher Behandlungsflüssigkeit in einem Nachbehandlungsschritt durchgeführt werden bei dem die Temperatur gesteuert wird, der der Formartikel ausgesetzt ist, und dem Formartikel gegebenenfalls ein Spülgas zugeführt wird. Zu diesem Zweck wird die Temperatur in der Behandlungskammer entsprechend gesteuert und wird gegebenenfalls durch den in der Behandlungskammer vorgesehenen Einlass für ein Spülgas ein Spülgas eingeleitet. Das Spülgas ist vorzugsweise inertes Gas, wie beispielsweise Argon oder Stickstoff.

Bei der vorliegenden Erfindung ist vorzugsweise eine Glättung der Oberfläche des Formartikels beabsichtigt, derart, dass die Oberfläche nach der Behandlung einen Mittenrauwert Rₐ von 6 µm oder weniger, vorzugsweise von 4 µm oder weniger und besonders bevorzugt von 2 µm oder weniger aufweist, wobei die Rauwerte bestimmt werden entsprechend der Norm ISO 25178-601:2010-07 (Geometrische Produktspezifikation (GPS) - Oberflächenbeschaffenheit: Flächenhaft - Teil 601: Merkmale von berührend messenden Geräten (mit Taster)).

Die Erfinder der vorliegenden Erfindung haben herausgefunden, dass zum Zweck der Glättung der Oberfläche eines Formartikels aus additiver Fertigung eine optimale Behandlungszeit bei vorzugsweise 15 s bis 15 min liegt. Die Behandlungszeit ist die Zeit, die der zu behandelnde Formartikel der Dampfphase der Behandlungsflüssigkeit ausgesetzt wird, bis die gewünschte Glättung der Oberfläche erreicht ist, d.h. bis beispielsweise eine optisch zufriedenstellende Oberfläche oder eine Oberfläche mit einem vorgegebenen maximalen Mittenrauwert Rₐ erreicht ist.

Bei kürzeren Behandlungszeiten, d.h. Behandlungszeiten von weniger als 15 s, wird es zunehmend schwierig, den Vorgang zu kontrollieren, wodurch insbesondere die Reproduzierbarkeit verschlechtert ist. Demgegenüber treten bei längeren Behandlungszeiten, d.h. bei Behandlungszeiten von mehr als 15 min, nachteilige Effekte auf, wie beispielsweise ein übermäßiges oberflächliches Quellen des Formartikels. Zudem wird bei einer zu langen Behandlungszeit der zu behandelnde Formartikel nicht nur oberflächlich erwärmt, so dass erwärmungsbedingt Volumenänderungen und in Folge davon Verformungen und Spannungen im Formartikel auftreten können. Enthält der Formartikel Hohlräume, so können durch Erwärmen und ein Ausdehnen der in den Hohlräumen eingeschlossenen Luft zusätzliche unerwünschte Verformungen auftreten.

Um die oben genannte optimale Behandlungszeit zu erreichen, kann die Behandlungsflüssigkeit entsprechend gewählt werden. Ist beispielsweise die Behandlungszeit zu kurz, da der Siedepunkt der Behandlungsflüssigkeit so hoch ist, dass der Vorgang des Anlösens und Glättens der Oberfläche des Formartikels zu schnell abläuft, so kann ein niedriger siedendes, azeotropes Gemisch verwendet werden, wodurch die Behandlungszeit verlängert und die Behandlung besser kontrollierbar und reproduzierbar wird.

Besonders bevorzugt reicht die Behandlungszeit von 20 s bis 10 min und noch weiter bevorzugt von 30 s bis 5 min.

Wird bei dem erfindungsgemäßen Verfahren im Schritt c) der Formartikel aus der Dampfphase entnommen, ist es vorteilhaft, restlicher Behandlungsflüssigkeit an der Oberfläche des Formartikels möglichst schnell zu entfernen, um die Behandlung zu stoppen. Dies beinhaltet auch das Entfernen von Behandlungsflüssigkeit, die aufgrund eines Quellens oberflächlicher Bereiche des Formartikels während des Aussetzens im Schritt b) in den Formartikel eingedrungen ist.

Das Entfernen von auf und/oder in der Oberfläche des behandelten Formartikels vorhandener restlicher Behandlungsflüssigkeit kann erreicht werden durch Verdunsten lassen, Verdunsten unter Wärmezufuhr, Verdunsten unter reduziertem Druck oder durch Abwaschen mittels einer geeigneten Reinigungsflüssigkeit.

Bei relativ flüchtigen Lösungsmitteln kann es ausreichend sein, dieses oder diese ohne zusätzliche Maßnahmen verdunsten zu lassen. Bei weniger flüchtigen Lösungsmitteln kann das Verdunsten beschleunigt werden durch Erwärmen des behandelten Formartikels und/oder durch Reduzieren des Drucks. Der Vorgang des Verdunstens kann ferner dadurch beschleunigt werden, dass der Formartikel einem Luftstrom ausgesetzt wird. Alternativ kann oberflächlich vorhandene restliche Behandlungsflüssigkeit auch abgewaschen werden, wobei vorzugsweise eine Flüssigkeit verwendet wird, die einerseits mit der Behandlungsflüssigkeit mischbar ist und andererseits den Kunststoff, aus dem der behandelte Formartikel hergestellt ist, nicht lösen oder anlösen kann. Es können auch Kombinationen der genannten Maßnahmen zum Entfernen von restlicher Behandlungsflüssigkeit angewendet werden.

Gemäß einer bevorzugten Ausführungsform wird das Entfernen des Formartikels aus der Dampfphase realisiert durch Beenden der Zufuhr von Behandlungsflüssigkeitsdampf zu dem Formartikel. Dadurch ist es nicht notwendig den Formartikel zu bewegen, wodurch die Gefahr einer Beschädigung der eventuell noch nicht vollständig ausgehärteten Oberfläche vermieden wird. Dies kann ferner unterstütz werden durch Zuführen eines Spülgases. Das Spülgas ist vorzugsweise inertes Gas, wie beispielsweise Argon oder Stickstoff.

Indem die Dampfphase durch Erwärmen der Behandlungsflüssigkeit bis zu deren Siedepunkt, d.h. durch Sieden der Behandlungsflüssigkeit, erzeugt wurde, wird die Temperatur der Dampfphase ungefähr dem Siedepunkt der Behandlungsflüssigkeit entsprechen. Demgegenüber wird der Formartikel vor der Behandlung in der Regel eine niedrigere Temperatur aufweisen, so dass bei dem Kontakt der Dampfphase mit dem Formartikel die dampfförmige Behandlungsflüssigkeit an der Oberfläche des Formartikels kondensieren wird. Das Ausmaß der Kondensation der Behandlungsflüssigkeit an der Oberfläche des Formartikels ist unter anderem von dem Temperaturunterschied zwischen Dampfphase und Formartikel abhängig.

Gemäß einer bevorzugten Ausführungsform des erfindungsgemäßen Verfahrens wird der zu behandelnde Formartikel vor dem Schritt des Aussetzens der erzeugten Dampfphase in einem Vorbehandlungsschritt auf eine vorgegebene Temperatur gebracht. Dadurch kann der Temperaturunterschied zwischen Dampfphase und Formartikel vorgegeben und somit der Vorgang der Kondensation von Behandlungsflüssigkeit auf der Oberfläche des Formartikels gesteuert werden.

Wird beispielsweise ein relativ geringer Temperaturunterschied zwischen Dampfphase und Formartikel vorgegeben, wobei die Temperatur des Formartikels geringer als die Temperatur der Dampfphase ist, wird sich ein relativ feiner Flüssigkeitsfilm auf der Oberfläche des Formartikels ausbilden und wird somit eine gleichmäßigere Glättung der Oberfläche erhalten.

Gemäß einer weiteren bevorzugten Ausführungsform des erfindungsgemäßen Verfahrens wird der Formartikel auf eine Temperatur gebracht wird, die oberhalb des Siedepunkts der Behandlungsflüssigkeit und unterhalb des Erweichungspunkts des Kunststoffs liegt. Bei dieser Ausführungsform wird verhindert, dass im Schritt b) Behandlungsflüssigkeit auf der Oberfläche des Formartikels kondensiert. Vielmehr löst die dampfförmige Behandlungsflüssigkeit die Oberfläche des Formartikels an, indem sie von dieser aufgenommen wird und sich dabei auf der Oberfläche des Formartikels eine Schicht ausbildet, in der der Kunststoff in einem zumindest teilweise gelösten Zustand vorliegt. In diesem Zustand ist der Kunststoff oberflächlich erweicht, was letztendlich eine Glättung der Oberfläche bewirkt.

Der Vorteil dieser Ausführungsform liegt darin, dass ein langsameres und damit besser kontrollierbares Anlösen der Oberfläche des Formartikels möglich wird, was vor allem bei Formartikeln mit fein strukturierten Oberflächen eine schonendere Glättung ermöglicht. Zudem wird vermieden, dass kondensierende Behandlungsflüssigkeit entlang der Oberfläche des Formartikels nach unten läuft wodurch die Behandlung bzw. Glättung der Oberfläche ungleichmäßig werden könnte.

Bei dem erfindungsgemäßen Verfahren wird über eine geeignete Druckausgleichseinrichtung ein Druckausgleich mit der Atmosphäre sichergestellt. Dadurch ist ein Ausleiten (Übergabe) von Abluft an die Atmosphäre möglich. Beim Ausleiten der Abluft während und/oder nach der Behandlung wird verhindert, dass Lösungsmitteldampf, der aus der Behandlungskammer austritt bzw. ausgeleitet wird oder der in der Dampferzeugungseinheit erzeugt wird, nach Außen in die Atmosphäre gelangt. Dies kann beispielsweise durch eine Kühleinrichtung erreicht werden, die außerhalb der Behandlungskammer vorgesehen sein kann. Die dadurch erhaltene kondensierte Behandlungsflüssigkeit kann zur erneuten Verwendung in der erfindungsgemäßen Vorrichtung eingesetzt werden, indem sie zu der Dampferzeugungseinheit rückgeführt wird.

Weitere Vorteile und Merkmale der vorliegenden Erfindung ergeben sich aufgrund der Beschreibung von Ausführungsbeispielen sowie anhand der Zeichnungen.

Es zeigt:
Fig. 1 Aufnahmen einer ersten Stelle des im Bearbeitungsbeispiel 2 verwendeten PP-Formartikels, wobei Fig. 1a eine Aufnahme vor der Behandlung zeigt und Fig. 1b eine Aufnahme nach einer Behandlung mittels des erfindungsgemäßen Verfahrens zeigt;
Fig. 2 Aufnahmen einer zweiten Stelle des im Bearbeitungsbeispiel 2 verwendeten PP-Formartikels, wobei Fig. 2a eine Aufnahme vor der Behandlung zeigt und Fig. 2b eine Aufnahme nach einer Behandlung mittels des erfindungsgemäßen Verfahrens zeigt.
Fig. 3 eine schematische Darstellung zur Veranschaulichung eines ersten Ausführungsbeispiels der erfindungsgemäßen Vorrichtung;
Fig. 4 eine schematische Darstellung zur Veranschaulichung eines zweiten Ausführungsbeispiels der erfindungsgemäßen Vorrichtung; und
Fig. 5 die Druckerhöhungseinrichtung der Vorrichtung in Fig. 4 in einer Ausschnittsvergrößerung.

### Beschreibung von Ausführungsbeispielen

Nachstehend werden Bearbeitungsbeispiele beschrieben, die beispielhaft die praktische Anwendung des erfindungsgemäßen Verfahrens zur Behandlung eines Formartikels aus Kunststoff aufzeigen.

In den Bearbeitungsbeispielen wurde die erfindungsgemäße Behandlung in einem topfförmigen Behälter aus Edelstahl oder bei kleinen Formartikeln in einem Becher aus Borosilikatglas durchgeführt. Der Behälter wies einen in der Draufsicht kreisförmigen Querschnitt auf, besaß einen flachen Boden und war nach oben hin offen. Am Boden des Behälters war eine Heizeinrichtung installiert mittels der eine darüber angeordnete und nach oben offene Schale erwärmt werden kann. In die Schale wurde die Behandlungsflüssigkeit in einer Menge gefüllt, die ausreichend war, während der gesamten Behandlungsdauer in dem Behälter eine gleichbleibende Dampfphase der Behandlungsflüssigkeit zu erzeugen. Oberhalb der Heizeinrichtung und der Schale war eine Stellfläche installiert, die so angeordnet und ausgestaltet war, dass der zu behandelnde Formartikel darauf platziert werden konnte und dann vollkommen von der in dem Behälter erzeugten Dampfphase der Behandlungsflüssigkeit umgeben war. Die Stellfläche war zudem so ausgestaltet, dass sie von der Heizeinrichtung nicht direkt erwärmt wurde.

Zur Durchführung der erfindungsgemäßen Behandlung wurde zuerst mittels der Heizeinrichtung die Schale mit der Behandlungsflüssigkeit erwärmt, bis die Behandlungsflüssigkeit zu sieden begann und sich der Behälter langsam mit der Dampfphase der Behandlungsflüssigkeit füllte. Durch die verdampfende Behandlungsflüssigkeit, deren Dampf schwerer als Luft war, wurde nach und nach die Luft aus dem Behälter verdrängt und füllte sich dieser mit der Dampfphase. Der Füllstand, d.h. die Höhe, bis zu der die Dampfphase im Inneren des Behälters angestiegen war, war gut erkennbar anhand von an der Innenwand des Behälters kondensierender Behandlungsflüssigkeit.

Sobald der Behälter nahezu vollständig mit der Dampfphase der Behandlungsflüssigkeit gefüllt war, wurde der zu behandelnde Formartikel auf der Stellfläche im Inneren des Behälters platziert. Nach Ablauf der Behandlungszeit wurde der Formartikel wieder entnommen und an einem Ort mit guter Belüftung solange stehen gelassen, bis oberflächlich vorhandene Behandlungsflüssigkeit verdunstet war.

Entsprechend dem oben geschilderten Verfahren wurden die nachfolgend aufgelisteten Bearbeitungsbeispiele 1 bis 3 durchgeführt, wobei die folgenden Materialien verwendet wurden:

### Kunststoffe:

| | |
|---|---|
| ABS: | Filament aus Acrylnitril-Butadien-Styrol-Copolymer mit der Bezeichnung "TitanX" des Herstellers Formfutura BV, HH Nijmegen, Niederlande, Farbe: schwarz, Durchmesser des Filaments 1,75 mm; |
| | Es wurde eine Düse mit einem Öffnungsdurchmesser von 0,6 mm verwendet; |
| PP: | Filament aus Polypropylen mit der Bezeichnung "Centaur PP" des Herstellers Formfutura BV, HH Nijmegen, Niederlande, |
| | Farbe: natur, Durchmesser des Filaments 1,75 mm; |
| | Es wurde eine Düse mit einem Öffnungsdurchmesser von 0,6 mm verwendet; |

### Lösungsmittel:

| | |
|---|---|
| Methylethylketon (MEK): | Technisch mind. 97%, Bernd Kraft GmbH |
| Toluol: | Technisch mind. 97%, VWR Chemicals |
| n-Propanol: | EMPLURA^{®}, Merck KGaA |
| Essigsäure: | 100%, technisch, VWR Chemicals |

### Bearbeitungsbeispiel 1

Ein mittels additiver Fertigung hergestellter Formartikel aus ABS mit einer Länge von ca. 5 cm, einer Breite von ca. 5 cm und einer Höhe von ca. 9 cm wurde in dem oben beschriebenen Behälter aus Borosilikatglas gemäß dem erfindungsgemäßen Verfahren behandelt, wobei als Behandlungsflüssigkeit MEK (Siedepunkt ca. 80 °C) verwendet wurde. Der Formartikel wurde vor der Behandlung auf 85 °C erwärmt. Die Behandlungszeit in der Dampfphase betrug 30 s.

### Bearbeitungsbeispiel 2

Ein mittels additiver Fertigung hergestellter Formartikel aus PP mit einer Länge von ca. 48 cm, einer Breite von ca. 8,5 cm und einer Höhe von ca. 20 cm wurde in dem oben beschriebenen Behälter aus Edelstahl gemäß dem erfindungsgemäßen Verfahren behandelt, wobei als Behandlungsflüssigkeit eine Mischung aus Toluol/Essigsäure mit 72 Gew.-% Toluol und 28 Gew.-% Essigsäure (Siedepunkt ca. 101 °C) verwendet wurde. Der Formartikel wurde vor der Behandlung nicht erwärmt und besaß Raumtemperatur. Die Behandlungszeit in der Dampfphase betrug 30 s.

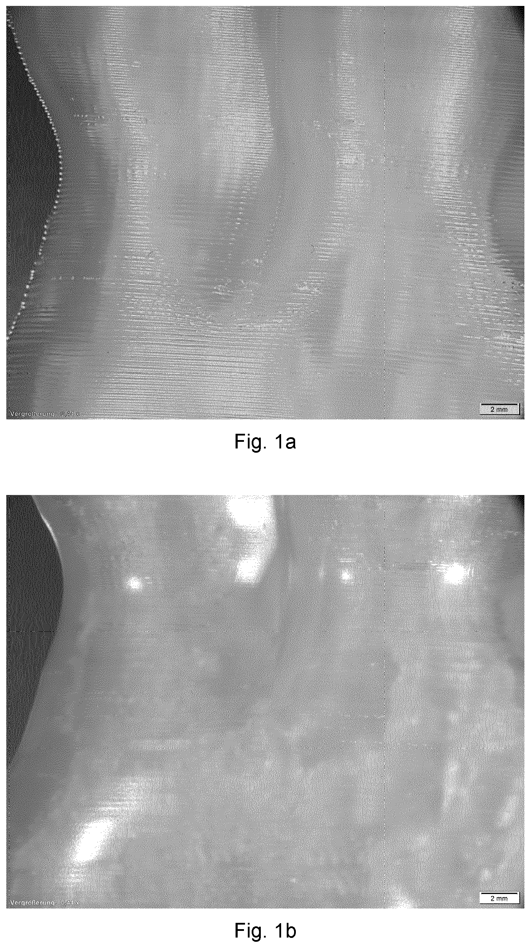

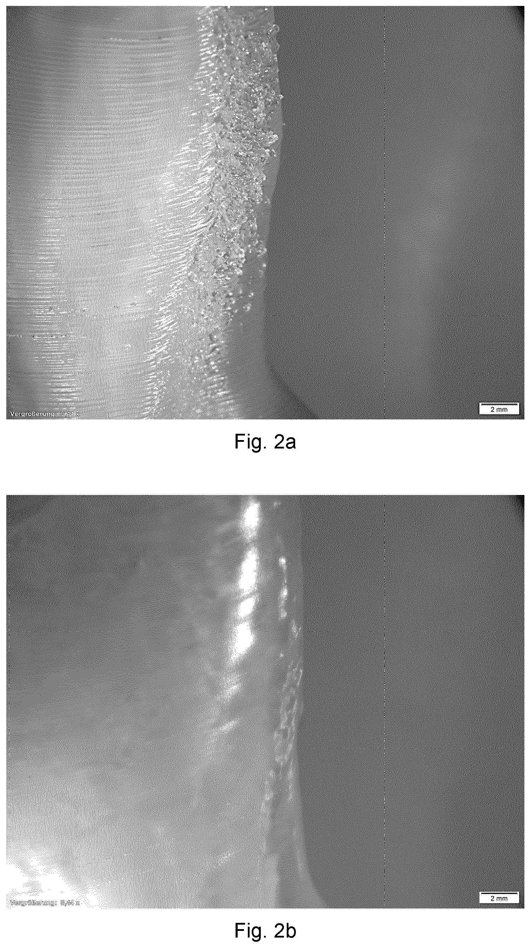

Zusätzlich wurden an zwei unterschiedlichen Stellen des Formartikels aus PP jeweils vor einer Behandlung und nach der Behandlung gemäß dem erfindungsgemäßen Verfahren fotographische Aufnahmen angefertigt, die in den Figuren 1a/1b und 2a/2b dargestellt sind. Die Aufnahmen zeigen eine deutliche Glättung der Oberfläche durch das erfindungsgemäße Verfahren, so dass die vor der Behandlung gut sichtbare Schichtstruktur nach der Behandlung kaum mehr erkennbar war.

### Bearbeitungsbeispiel 3

Zwei mittels additiver Fertigung hergestellte Formartikel aus PP mit jeweils einer Länge von ca. 48 cm, einer Breite von ca. 8,5 cm und einer Höhe von ca. 20 cm wurden in dem oben beschriebenen Behälter aus Edelstahl gemäß dem erfindungsgemäßen Verfahren behandelt, wobei als Behandlungsflüssigkeit eine Mischung aus Toluol/n-Propanol mit 51 Gew.-% Toluol und 49 Gew.-% n-Propanol (Siedepunkt ca. 93 °C) verwendet wurde. Die Formartikel wurden vor der Behandlung nicht erwärmt und besaßen Raumtemperatur. Die Behandlungszeiten in der Dampfphase betrugen 30 s bzw. 60 s.

Ein Vergleich der Ergebnisse der Bearbeitungsbeispiele 1 bis 3 ergab bei einer visuellen Begutachtung der behandelten Formartikel, dass der im Bearbeitungsbeispiel 1 behandelte Formartikel, der vor der Behandlung auf eine Temperatur oberhalb des Siedepunkts der Behandlungsflüssigkeit erwärmt wurde, einen deutlich höheren Glanz aufwies als der mit dem Bearbeitungsbeispiel 2 behandelte Formartikel, der ohne vorheriges Erwärmen behandelt wurde.

Bei einer identischen Behandlungszeit von 30 s zeigte der mit dem Bearbeitungsbeispiel 2 behandelte PP-Formartikel eine bessere Glättung als der mit dem Bearbeitungsbeispiel 3 behandelte PP-Formartikel. Wurde die Behandlungszeit im Bearbeitungsbeispiel 3 auf 60 s verlängert, so war die Glättung vergleichbar mit der im Bearbeitungsbeispiel 2 erhaltenen. Dennoch erschien der Glanz des mit dem Bearbeitungsbeispiel 3 behandelten PP-Formartikels etwas höher.

### Bearbeitungsbeispiel 4

In diesem Beispiel wurde das Ergebnis der Glättung mittels des erfindungsgemäßen Verfahrens mit dem Ergebnis bei Anwendung des alternativen Verfahren zum Glätten der Oberfläche mittels Verschleifen der Unebenheiten verglichen.

Dazu wurden auf identische Weise zwei Formartikel aus Polypropylen (PP) mittels additiver Fertigung (3D-Druck) hergestellt. Einer der beiden Formartikel wurde auf eine im Stand der Technik übliche Weise mittels Verschleifen der oberflächlichen Unebenheiten geglättet. Der andere der beiden Formartikel wurde gemäß dem oben beschriebenen erfindungsgemäßen Verfahren behandelt.

Bei den verwendeten Formartikeln wurden vor der Behandlung und nach dem Glätten gemäß dem erfindungsgemäßen Verfahren bzw. nach dem Glätten durch Verschleifen an verschiedenen Punkten die Rauheit der Oberfläche mit einem Tastschnittmessgerät gemessen (Messverfahren nach ISO 25178-601:2010-07, verwendetes Gerät: MarSurf M300, Hersteller: Fa. Mahr GmbH). In Tabelle 1 sind die gemessenen Werte aufgezeigt.

**Tabelle 1**

| | Glätten gemäß Erfindung | | Glätten durch Verschleifen | | unbehandelter Formartikel | |
|---|---|---|---|---|---|---|
| | Ra /µm | Rz / µm | Ra /µm | Rz / µm | Ra /µm | Rz / µm |
| Punkt 1 | 1,295 | 6,061 | 7,488 | 41,05 | 12,44 | 58,16 |
| Punkt 2 | 1,167 | 5,823 | 5,778 | 30,48 | 10,58 | 54,89 |
| Punkt 3 | 1,609 | 7,204 | 5,847 | 34,12 | 14,03 | 71,59 |
| Punkt 4 | 1,6 | 7,592 | 5,908 | 30,62 | 12,11 | 60,52 |
| Punkt 5 | 1,263 | 5,845 | 7,894 | 46,34 | 12,96 | 62,52 |
| Punkt 6 | 1,083 | 5,845 | 5,153 | 34,18 | | |
| Punkt 7 | 1,456 | 7,161 | 5,153 | 31,8 | | |
| Punkt 8 | 1,489 | 7,65 | 4,83 | 31,83 | | |
| 50% Quantil | 1,4 | 6,6 | 5,8 | 33,0 | 12,4 | 60,5 |
| Mittelwert | 1,4 | 6,6 | 6,0 | 35,1 | 12,4 | 61,5 |

Die Ergebnisse zeigen deutlich, dass mit dem erfindungsgemäßen Verfahren zur Behandlung eines Formartikels aus Kunststoff eine deutlich glattere Oberfläche erreicht werden konnte gegenüber einer glättenden Behandlung durch Verschleifen der durch die Herstellung bedingten Unebenheiten. Zudem war die dazu notwendige Behandlungszeit deutlich kürzer, und war das erfindungsgemäße Verfahren somit für den industriellen Einsatz und der Herstellung größerer Stückzahlen besser geeignet.

Nachstehend werden Ausführungsbeispiele der erfindungsgemäßen Vorrichtung auf der Basis der zugehörigen Figuren beschrieben.

### Erstes Ausführungsbeispiel der erfindungsgemäßen Vorrichtung

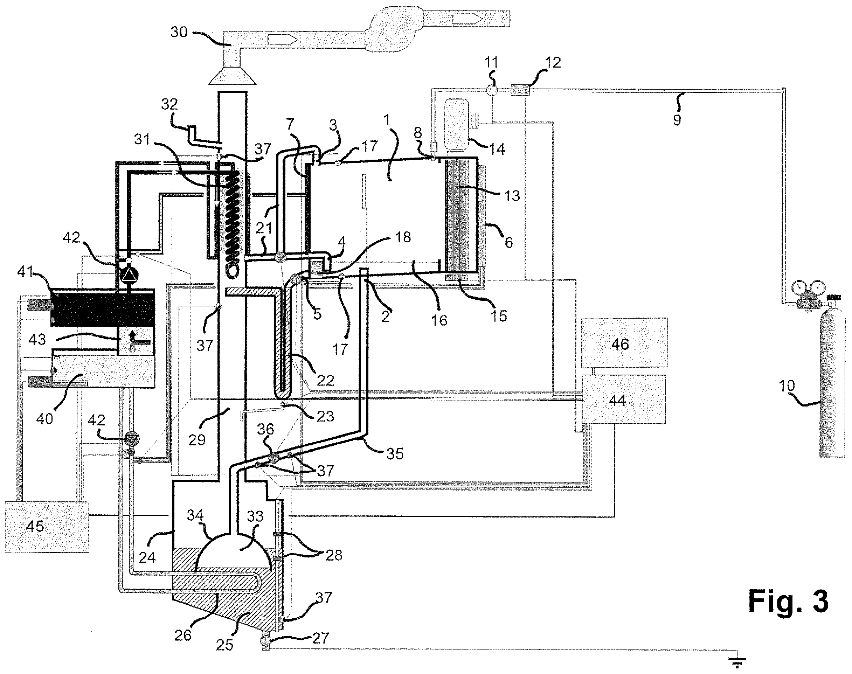

Fig. 3 zeigt eine schematische Darstellung zur Veranschaulichung eines ersten Ausführungsbeispiels der erfindungsgemäßen Vorrichtung.

Die Vorrichtung weist eine Behandlungskammer 1 auf mit einer verschließbaren Tür (nicht gezeigt), einem Einlass 2 für den Behandlungsflüssigkeitsdampf, einem oberen Auslass 3 für Behandlungsflüssigkeitsdampf, einem unteren Auslass 4 für den Behandlungsflüssigkeitsdampf und einem Auslass 5 für kondensierte Behandlungsflüssigkeit. Zur Regelung der Temperatur in der Behandlungskammer sind eine Heizeinrichtung 6, eine Kühleinrichtung 7 und Temperatursensoren 17 vorgesehen. Die Behandlungskammer weist ferner einen Einlass 8 für ein Spülgas auf der über eine Gasleitung 9 mit einem entsprechenden Gasreservoir 10 wie einer Gasflasche verbunden ist. In der Gasleitung sind ein Spülgasschaltventil 11 und ein Spülgasdrucksensor 12 vorgesehen.

Für eine gleichmäßige Verteilung der Gase in der Behandlungskammer ist ein Ventilator 13 vorgesehen, der über eine magnetische Kopplung von einem außerhalb der Behandlungskammer angeordneten Motor 14 angetrieben wird. Somit wir vermieden, dass eine Zündquelle in der Form eines elektrischen Bauteils im Inneren der Kammer vorhanden ist. Für eine Überwachung des Ventilators ist außerhalb der Behandlungskammer ein Rotationssensor 15 angeordnet.

In der Behandlungskammer ist zudem eine Ablage 16 vorgesehen, beispielsweise in der Form eines Lochbleches, auf der der zu behandelnde Formartikel positioniert werden kann.

Die Vorrichtung weist ferner eine Dampferzeugungseinheit auf in der durch Erwärmen der Behandlungsflüssigkeit bis zum Sieden ein Behandlungsflüssigkeitsdampf erzeugt und der Behandlungskammer 1 zugeführt wird. Der der Behandlungskammer 1 zugeführte Behandlungsflüssigkeitsdampf wird nach dem Durchströmen der Behandlungskammer 1 über entsprechende Leitungen 21 wieder zu der Dampferzeugungseinheit rückgeführt. Zudem wird in der Behandlungskammer 1 auskondensierte Behandlungsflüssigkeit über eine Leitung 22 mit Siphon zur Dampferzeugungseinheit rückgeführt. Der Siphon kann bei Bedarf über ein Absperrventils 23 in die Dampferzeugungseinheit entleer werden. Am Auslass 5 für kondensierte Behandlungsflüssigkeit kann ein Filter 18 vorgeschaltet werden.

Im unteren Teil der Dampferzeugungseinheit ist ein Behälter 24 für die Behandlungsflüssigkeit 25 vorgesehen, in dem die Behandlungsflüssigkeit mittels einer Heizeinrichtung 26 erwärmt wird. Der Behälter 24 weist einen absperrbaren Auslass 27 auf, über den der Behälter 24 bei Bedarf entleert werden kann. Während des Betriebs der Vorrichtung ist der Behälter 24 ca. bis zur Hälfte mit der Behandlungsflüssigkeit 25 gefüllt. Der Füllstand kann mittels geeigneter Füllstandssensoren 28 überwacht werden.

Der Behälter 24 mündet nach oben in ein Rohr 29, das sich weiter nach oben erstreckt und nach oben hin offen ist. An der oberen Öffnung des Rohrs 29 ist eine Abluftvorrichtung 30 angeordnet, die nach oben aus der Dampferzeugungseinheit austretende Gase absaugt.

Im oberen Teil des Rohrs 29 ist eine Kühleinrichtung 31 vorgesehen, beispielsweise in Form eines Schlangenkühlers, mittels der im Rohr aufsteigender Behandlungsflüssigkeitsdampf kondensiert werden kann und die auskondensierte Behandlungsflüssigkeit nach unten in den Behälter 24 zurückläuft. Dadurch wird verhindert, dass Behandlungsflüssigkeitsdampf nach außerhalb der Vorrichtung gelangt. Der aus der Behandlungskammer 1 durch die Auslässe 3, 4 austretende Behandlungsflüssigkeitsdampf wird über die Rückführleitungen 21 der Kühleinrichtung 31 der Dampferzeugungseinheit zugeführt, so dass der Behandlungsflüssigkeitsdampf auskondensiert und die auskondensierte Behandlungsflüssigkeit ebenfalls nach unten in den Behälter 24 zurückläuft. Im oberen Teil des Rohrs 29 oberhalb der Kühleinrichtung 31 ist zudem eine Einfüllöffnung 32 für Behandlungsflüssigkeit vorgesehen.

Die Dampferzeugungseinheit weist ferner eine Druckerhöhungseinrichtung 33 in der Form einer nach untern offenen Halbkugel 34 auf, die von oben in die Behandlungsflüssigkeit 25 im Behälter 24 eintaucht. Oben auf der nach untern offenen Halbkugel 34 ist eine Leitung 35 für Behandlungsflüssigkeitsdampf angeschlossen über die der in der Dampferzeugungseinheit erzeugte Behandlungsflüssigkeitsdampf zum Einlass 2 der Behandlungskammer 1 geleitet wird. In der Leitung 35 ist ein Absperrventil 36 vorgesehen.

Bei Betrieb der Heizeinrichtung 26 tritt der an der Heizeinrichtung 26 erzeugte Behandlungsflüssigkeitsdampf von untern in die Halbkugel 34 ein, sammelt sich darin und verdrängt zu Teil die darin befindliche Behandlungsflüssigkeit. Durch den entstehenden Niveauunterschied der Behandlungsflüssigkeit innerhalb und außerhalb der Halbkugel 34 steht der Behandlungsflüssigkeitsdampf innerhalb der Halbkugel 34 unter einem geringen Überdruck durch den der Behandlungsflüssigkeitsdampf der Behandlungskammer 1 zugeführt werden kann. Dadurch kann auf eine mechanische Pumpe verzichtet werden. Der Überdruck, d.h. das Ausmaß der Druckerhöhung, kann über den Füllstand an Behandlungsflüssigkeit 25 im Behälter 24 bzw. über die Eintauchtiefe der Halbkugel 34 in die Behandlungsflüssigkeit 25 eingestellt werden.

Für eine genaue Steuerung der Dampferzeugung sind im Behälter 24 für Behandlungsflüssigkeit, im Rohr 29 und der Leitung 35 mehrere Temperatursensoren 37 vorgesehen.

Bei der Vorrichtung der Fig. 3 werden sowohl in den Heizeinrichtungen 6 und 26 wie auch den Kühleinrichtungen 7 und 31 die Wärmeübertragungen mittels flüssiger Übertragungsmedien bewerkstelligt. Diese Übertragungsmedien können geeignete Wärmeübertragungsmedien und Kälteübertragungsmedien sein, wie beispielsweise temperaturbeständige Silikon-, Paraffin- oder Glycolöle oder auch Wasser. Zu diesem Zweck sind die Heizeinrichtungen 6 und 26 über entsprechende Fluidleitungen mit einem Reservoir 40 für heißes Übertragungsmedium (Wärmeübertragungsmedium) verbunden und sind die Kühleinrichtungen 7 und 31 über entsprechende Fluidleitungen mit einem Reservoir 41 für kaltes Übertragungsmedium (Kälteübertragungsmedium) verbunden. Die Übertragungsmedien werden mittels Pumpen 42 im Kreislauf geführt. Die Reservoirs 40, 41 werden elektrisch beheizt oder gekühlt.

Um den Energieverbrauch der erfindungsgemäßen Vorrichtung gering zu halten ist zwischen den beiden Kreisläufen, d.h. dem Kreislauf des Wärmeübertragungsmediums und dem Kreislauf des Kälteübertragungsmediums, eine Wärmepumpe 43 vorgesehen. In der Vorrichtung der Fig. 3 ist die Wärmepumpe 43 zwischen dem Reservoir 40 für heißes Übertragungsmedium und dem Reservoir 41 für kaltes Übertragungsmedium angeordnet.

Die erfindungsgemäße Vorrichtung der Fig. 3 weist zudem eine Steuereinheit 44 auf die über Steuerleitungen mit den Ventilen und Sensoren der Vorrichtung verbunden ist, so dass Messwerte wie beispielsweise Temperatur, Druck und Füllstand und auch die Stellung der einzelnen Ventile erfasst und die Ventile entsprechen angesteuert werden können, um diese zu öffnen, umzuschalten oder zu schließen oder den Durchfluss durch die Ventile geeignet zu regulieren. Die Steuereinheit 44 ist zudem mit dem Motor 14 und dem Rotationssensor 15 verbunden, so dass damit auch der Betrieb des Ventilators 13 gesteuert und überwacht werden kann. Die Steuereinheit 44 weist ferner eine separate Steuereinrichtung für die Heiz- und Kühleinrichtungen auf die über Steuerleitungen mit den Ventilen und Sensoren des Kühl- und Heizkreislaufs und auch mit der Steuereinheit 44 verbunden ist.

Ferner weist die Vorrichtung der Fig. 3 eine Bedieneinheit 46 auf, die mit der Steuereinheit 44 verbunden ist und an der die relevanten Parameter für die Behandlung, insbesondere auch vordefinierte Behandlungsprogramme, eingestellt oder ausgewählt werden können. Somit kann die Behandlung von einem breiten Personenkreis durchgeführt werden und sind zudem auch komplexere Verfahrensführungen möglich.

### Zweites Ausführungsbeispiel der erfindungsgemäßen Vorrichtung

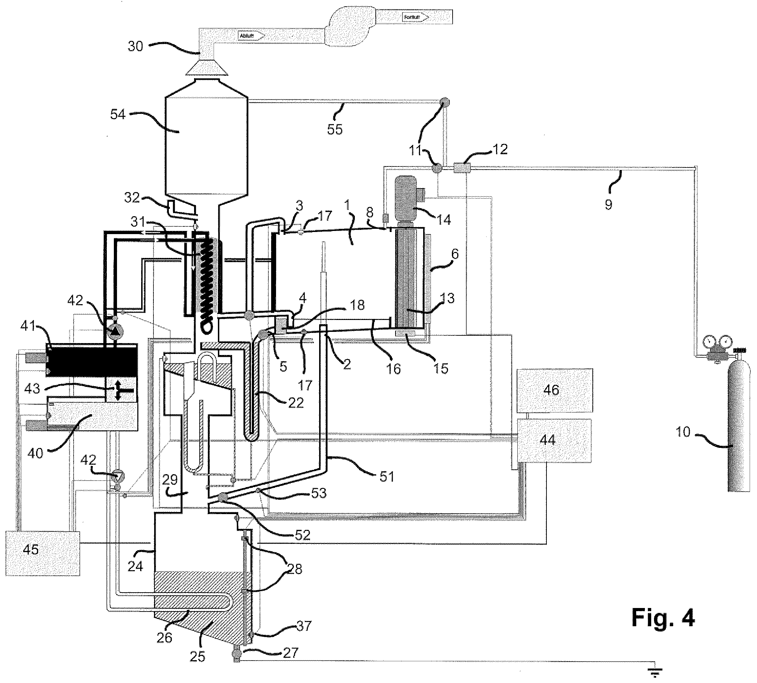

Im Folgenden wird die in Fig. 4 dargestellte erfindungsgemäße Vorrichtung beschrieben, wobei auf die Elemente, die identisch sind mit der Vorrichtung der Fig. 3 nicht näher eingegangen wird, da diese bereits oben beschrieben wurden.

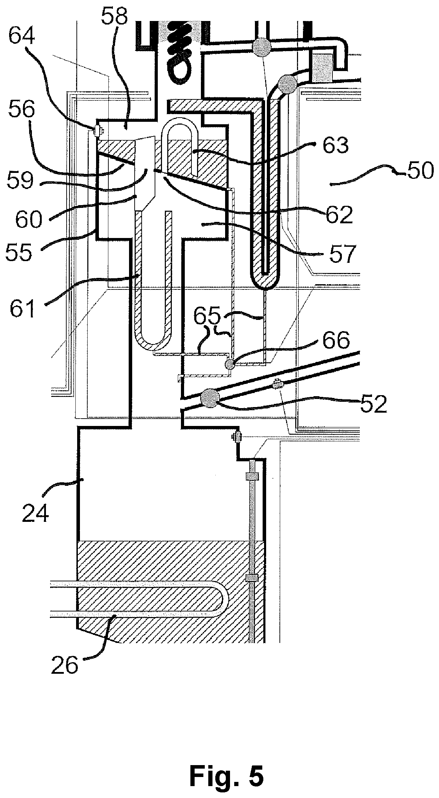

Die Vorrichtung in Fig. 4 unterscheidet sich von der Vorrichtung in Fig. 3 durch die Ausgestaltung der Dampferzeugungseinheit, insbesondere durch die Ausgestaltung der Druckerhöhungseinrichtung 50. Diese ist im Rohr 29 zwischen dem Behälter 24 für Behandlungsflüssigkeit und der Kühleinrichtung 31 angeordnet und wird anhand der Ausschnittsvergrößerung in Fig. 5 näher erläutert.

Im Unterschied zu der Vorrichtung in Fig. 3 wird bei der Vorrichtung in Fig. 4 der im Behälter 24 erzeugte Behandlungsflüssigkeitsdampf direkt über eine Leitung 51 für Behandlungsflüssigkeitsdampf dem Einlass 2 für Behandlungsflüssigkeitsdampf der Behandlungskammer 1 zugeführt. In der Leitung 51 sind ein Absperrventil 52 und ein Temperatursensor 53 vorgesehen. Zwischen der Kühleinrichtung 31 und Abluftvorrichtung 30 ist ferner ein Druckausgleichsbehälter 54 angeordnet. Der Druckausgleichsbehälter 54 ist über eine Spülgasleitung 55 mit der Spülgasleitung 9 mit einem Spülgasschaltventil 11 verbunden. Über die Spülgasleitung 55 kann Spülgas in den Druckausgleichsbehälter 54 eingeleitet werden, um darin eine Schicht aus Spülgas als eine Schutzgasschicht auszubilden, so dass sichergestellt ist, dass bei plötzlichen Druckschwankungen kein Behandlungsflüssigkeitsdampf aus der Vorrichtung austritt. Damit wird auch sichergestellt, dass keine Luft (Sauerstoff) in die Vorrichtung eindringen und ein brennbares oder explosionsfähiges Gasgemisch entstehen kann.

In Fig. 5 ist die Druckerhöhungseinrichtung 50 der Vorrichtung in Fig. 4 vergrößert dargestellt. Die Druckerhöhungseinrichtung 50 ist in einem Gehäuse 55 untergebracht das über das Rohr 29 in Verbindung mit dem Behälter 24 für Behandlungsflüssigkeit steht und das durch eine nach unten schräg verlaufende Trennwand 56 in eine untere Abteilung 57 und eine obere Abteilung 58 unterteilt ist. In der Trennwand 56 ist ein erster Durchlass 59 vorgesehen durch den ein Rohr 60 geführt ist, das am oberen Ende, das in der oberen Abteilung 58 liegt, abgeschrägt ist und das am unteren Ende, das in der unteren Abteilung 57 liegt, verjüngt und mit einem nach oben offenen ersten U-Rohr 61 verbunden ist. Das erste U-Rohr 61 ist so ausgerichtet, dass sein freier Schenkel nicht die Trennwand 56 berührt und somit für einen Fluiddurchgang offen ist.

In einem zweiten Durchlass 62, der einen geringeren Durchmesser aufweist als der erste Durchlass 59, ist ein zweites U-Rohr 63 angebracht, das sich nach oben erstreckt und nach unten offen ist. Das zweite U-Rohr 63 ist so ausgerichtet, dass sein freier Schenkel nicht die Trennwand 56 berührt und somit für einen Fluiddurchgang offen ist. Das zweite U-Rohr 63 ist so dimensioniert, dass sein oberes Ende über dem oberen Ende des Rohrs 60 liegt.

Beim Betrieb der Vorrichtung ist die obere Abteilung 58 bis zum oberen abgeschrägten Ende des Rohrs 60 mit Behandlungsflüssigkeit gefüllt. Oberhalb des Flüssigkeitsspiegels in der oberen Abteilung 58 ist am Gehäuse 55 ein Temperatursensor 64 vorgesehen.

Wir vor dem Start der eigentlichen Behandlung des Formartikels, d.h. bevor Behandlungsflüssigkeitsdampf der Behandlungskammer 1 zugeführt wird, die Dampferzeugungseinheit in Betrieb genommen, so entsteht durch verdampfende Behandlungsflüssigkeit in dem Bereich oberhalb des Behälters 24 für Behandlungsflüssigkeit und damit auch in der unteren Abteilung 57 ein Überdruck, da das Absperrventil 52 geschlossen ist. Dadurch wird die Flüssigkeit im freien Schenkel des zweiten U-Rohrs 63 nach unten verdrängt, bis das zweite U-Rohr 63 vollständig mit Behandlungsflüssigkeitsdampf gefüllt ist. Wird weiter Behandlungsflüssigkeitsdampf erzeugt, so blubbert dieser aus dem zweiten U-Rohr 63 durch die Behandlungsflüssigkeit in der oberen Abteilung 58 nach oben und wird an der Kühleinrichtung 31 kondensiert. Das Kondensat tropft nach unten in die obere Abteilung 58 und läuft über das Rohr 60 in das erste U-Rohr 61 und aus dem freien Schenkel des ersten U-Rohrs nach unten in den Behälter 24. Zu diesem Zeitpunkt stellt sich hinsichtlich des Drucks im Gasraum der unteren Abteilung 57 und des Behälters 24 ein Gleichgewicht ein, wobei der resultierende Überdruck durch den Niveauunterschied zwischen Flüssigkeitsoberfläche in der oberen Abteilung 58 und unterem Ende des freien Schenkels des zweiten U-Rohrs 63 festgelegt ist. Damit kein Druck aus der unteren Abteilung 57 durch das erste U-Rohr 61 nach oben entweicht, muss der freie Schenkel des ersten U-Rohrs 61 länger sein als der freie Schenkel des zweiten U-Rohrs 63.

Um die Dampferzeugungseinheit für einen Wechsel der Behandlungsflüssigkeit entleeren zu können sind Ablassleitungen 65 mit dem unteren Ende des ersten U-Rohrs 61, dem unteren Ende des Siphons in der Rückführleitung 22 für kondensierte Behandlungsflüssigkeit und dem tiefsten Punkt in der oberen Abteilung 58 mit einem Absperrventil 66 verbunden, über das die Behandlungsflüssigkeit aus diesen Komponenten in den Behälter 24 für Behandlungsflüssigkeit abgelassen werden kann.

Wie in der Vorrichtung in Fig. 3 sind auch bei der Vorrichtung in der Fig. 4 und 5 die jeweiligen Sensoren und Ventile über Steuerleitungen mit der Steuereinheit 44 verbunden.

Durch die Druckerhöhungseinrichtungen in den erfindungsgemäßen Vorrichtungen kann Behandlungsflüssigkeitsdampf mit einem gegebenen Überdruck bereitgehalten werden, so dass die Behandlungskammer in sehr kurzer Zeit mit Behandlungsflüssigkeitsdampf gefüllt werden kann.

### Liste der Bezugszeichen:

- 1: Behandlungskammer
- 2: Einlass für Behandlungsflüssigkeitsdampf
- 3: oberer Auslass für Behandlungsflüssigkeitsdampf
- 4: unterer Auslass für Behandlungsflüssigkeitsdampf
- 5: Auslass für kondensierte Behandlungsflüssigkeit
- 6: Heizeinrichtung der Behandlungskammer
- 7: Kühleinrichtung der Behandlungskammer
- 8: Einlass für Spülgas
- 9: Gasleitung für Spülgas
- 10: Gasreservoir
- 11: Spülgasschaltventil
- 12: Spülgasdrucksensor
- 13: Ventilator
- 14: Motor
- 15: Rotationssensor
- 16: Ablage
- 17: Temperatursensoren in der Behandlungskammer
- 18: Filter
- 21: Rückführleitung für Behandlungsflüssigkeitsdampf
- 22: Rückführleitung für kondensierte Behandlungsflüssigkeit mit Siphon
- 23: Absperrventil des Siphons
- 24: Behälter für Behandlungsflüssigkeit
- 25: Behandlungsflüssigkeit
- 26: Heizeinrichtung
- 27: absperrbarer Auslass
- 28: Füllstandssensoren
- 29: Rohr
- 30: Abluftvorrichtung
- 31: Kühleinrichtung der Dampferzeugungseinheit
- 32: Einfüllöffnung für Behandlungsflüssigkeit
- 33: Druckerhöhungseinrichtung in Vorrichtung in Fig. 3
- 34: Halbkugel
- 35: Leitung für Behandlungsflüssigkeitsdampf
- 36: Absperrventil
- 37: Temperatursensoren
- 40: Reservoir für heißes Übertragungsmedium
- 41: Reservoir für kaltes Übertragungsmedium
- 42: Pumpen für Übertragungsmedien
- 43: Wärmepumpe
- 44: Steuereinheit
- 45: Steuereinrichtung für Heiz- und Kühleinrichtungen
- 46: Bedieneinheit
- 50: Druckerhöhungseinrichtung in Vorrichtung in Fig. 4 und 5
- 51: Leitung für Behandlungsflüssigkeitsdampf
- 52: Absperrventil
- 53: Temperatursensor
- 54: Druckausgleichsbehälter
- 55: Gehäuse der Druckerhöhungseinrichtung
- 56: Trennwand
- 57: untere Abteilung des Gehäuses
- 58: obere Abteilung des Gehäuses
- 59: erster Durchlass
- 60: Rohr
- 61: erstes U-Rohr, nach oben offen
- 62: zweiter Durchlass
- 63: zweites U-Rohr, nach unten offen
- 64: Temperatursensor
- 65: Ablassleitungen
- 66: Absperrventil

## Patentansprüche

1. Vorrichtung zur Behandlung eines Formartikels aus Kunststoff mit Dampf einer Behandlungsflüssigkeit, wobei die Vorrichtung aufweist:
mindestens eine verschließbare und temperierbare Behandlungskammer (1) zur Aufnahme und Behandlung des Formartikels,
mindestens eine Dampferzeugungseinheit zum Bereitstellen von Behandlungsflüssigkeitsdampf, wobei die Dampferzeugungseinheit von der Behandlungskammer (1) räumlich getrennt ist,
mindestens eine absperrbare Fluidverbindung zwischen Behandlungskammer (1) und Dampferzeugungseinheit, welche geeignet ist, der Behandlungskammer (1) Behandlungsflüssigkeitsdampf zuzuführen und Kondensat rückzuführen, und
eine Druckausgleichseinrichtung zur Übergabe von Abluft bei Atmosphärendruck, welche geeignet ist, während der Behandlung einen Druckausgleich mit dem Atmosphärendruck zu ermöglichen, und welche eine Einrichtung zur Rückhaltung von Behandlungsflüssigkeitsdampf aufweist, die geeignet ist das Austreten von Behandlungsflüssigkeitsdampf in die Atmosphäre zu verhindern.

2. Vorrichtung nach Anspruch 1, wobei die Behandlungskammer (1) eine verschließbare Öffnung zum Beschicken der Behandlungskammer mit dem zu behandelnden Formartikel, mindestens einen Einlass (2) und mindestens einen Auslass (3, 4) für Behandlungsflüssigkeitsdampf, einen Auslass (5) für kondensierte Behandlungsflüssigkeit, und eine Heizeinrichtung (6) und eine Kühleinrichtung (7) zum Temperieren des Inneren der Behandlungskammer (1) aufweist und zudem vorzugsweise einen Einlass (8) für ein Spülgas aufweist.

3. Vorrichtung nach einem der vorhergehenden Ansprüche, wobei die Dampferzeugungseinheit einen Behälter (24) zum Vorhalten der Behandlungsflüssigkeit, eine Heizeinrichtung (26) zum Erwärmen der Behandlungsflüssigkeit auf deren Siedetemperatur, eine Druckerhöhungseinrichtung (33, 50) zum Erhöhen des Drucks des Behandlungsflüssigkeitsdampfs um einen vorgegebenen Druck und eine Kühleinrichtung (31) zum Kondensieren von überschüssigem Behandlungsflüssigkeitsdampf aufweist.

4. Vorrichtung nach einem der vorhergehenden Ansprüche, wobei die mindestens eine absperrbare Fluidverbindung Einrichtungen zum Zuführen des Behandlungsflüssigkeitsdampfs von der Dampferzeugungseinheit zu der Behandlungskammer, zum Rückführen von Behandlungsflüssigkeitsdampf aus der Behandlungskammer zu der Dampferzeugungseinheit, zum Rückführen von kondensierter Behandlungsflüssigkeit aus der Behandlungskammer zu der Dampferzeugungseinheit und zum Zuführen von Spülgas zu der Behandlungskammer umfasst, wobei die Einrichtungen zum Zuführen und Rückführen Absperreinrichtungen aufweisen.

5. Vorrichtung nach einem der vorhergehenden Ansprüche, wobei die Vorrichtung eine Steuereinheit (44, 45) zum Steuern der Ströme an Behandlungsflüssigkeitsdampf zwischen Behandlungskammer und Dampferzeugungseinheit, der Rückführung von kondensierter Behandlungsflüssigkeit aus der Behandlungskammer zu der Dampferzeugungseinheit und zum Temperieren der Behandlungskammer aufweist und die Steuereinheit (44) gegebenenfalls die Zufuhr von Spülgas zur Behandlungskammer steuert.

6. Vorrichtung nach Anspruch 5, wobei die Steuereinheit (44) angepasst ist zum
- Steuern während eines Vorbehandlungsschrittes der Temperatur im Inneren der Behandlungskammer (1), um den zu behandelnden Formkörper auf eine Anfangstemperatur zu bringen, die höher als die Raumtemperatur ist,
- Steuern während eines Behandlungsschrittes, der auf den Vorbehandlungsschritt folgt, der Temperatur im Inneren der Behandlungskammer (1), der Ströme an Behandlungsflüssigkeitsdampf zwischen Behandlungskammer und Dampferzeugungseinheit und der Zeitdauer des Behandlungsschrittes, und
- Steuern während eines Nachbehandlungsschrittes, der auf den Behandlungsschritt folgt, der Temperatur im Inneren der Behandlungskammer (1) und der Zufuhr von Spülgas zur Behandlungskammer (1),
und wobei die Steuereinheit (44) gegebenenfalls angepasst ist, der Behandlungskammer im Vorbehandlungsschritt Spülgas zuzuführen.

7. Vorrichtung nach einem der vorhergehenden Ansprüche, wobei die Vorrichtung eine Bedieneinheit (46) zum Auswählen oder Einstellen relevanter Parameter für die Behandlung des Formartikels aufweist und die relevanten Parameter insbesondere den Volumenstrom an der Behandlungskammer zugeführtem Behandlungsflüssigkeitsdampf, die Temperatur im Inneren der Behandlungskammer, die Zeitdauer der Behandlung oder einzelner Behandlungsschritte und vordefinierte Kombinationen dieser Parameter umfassen.

8. Vorrichtung nach einem der vorhergehenden Ansprüche, mit einer Druckreguliereinrichtung zur Regulierung des Drucks mit dem die Dampferzeugungseinheit den Behandlungsflüssigkeitsdampf bereitstellt.

9. Verfahren zur Behandlung eines Formartikels aus Kunststoff mit den Schritten
a) Erzeugen einer Dampfphase durch Erwärmen einer Behandlungsflüssigkeit bis zu deren Siedepunkt, wobei die Behandlungsflüssigkeit mindestens ein Lösungsmittel umfasst, das in der Lage ist, den Kunststoff zu lösen oder anzulösen,
b) Behandlungsschritt bei dem der zu behandelnde Formartikel der im Schritt a) erzeugten Dampfphase für eine vorgegebene Behandlungszeit ausgesetzt wird indem vorzugsweise der erzeugte Behandlungsflüssigkeitsdampf dem Formartikel zugeführt wird und
c) Entfernen des Formartikels aus der Dampfphase und Entfernen von auf der Oberfläche des behandelten Formartikels vorhandener restlicher Behandlungsflüssigkeit,
**dadurch gekennzeichnet dass** während der Behandlung ein Druckausgleich mit dem Atmosphärendruck gegeben ist und verhindert wird, dass Behandlungsflüssigkeitsdampf in die Atmosphäre gelangt.

10. Verfahren nach Anspruch 9, wobei das Entfernen des Formartikels aus der Dampfphase realisiert wird durch Beenden der Zufuhr von Behandlungsflüssigkeitsdampf zu dem Formartikel.

11. Verfahren nach Anspruch 9 oder 10, wobei das Entfernen von auf der Oberfläche des behandelten Formartikels vorhandener restlicher Behandlungsflüssigkeit in Schritt c) in einem Nachbehandlungsschritt stattfindet bei dem die Temperatur gesteuert wird, der der Formartikel ausgesetzt ist, und dem Formartikel gegebenenfalls ein Spülgas zugeführt wird.

12. Verfahren nach einem der Ansprüche 9 bis 11, wobei das Lösungsmittel ausgewählt ist aus organischen Lösungsmitteln, wie aliphatischen oder aromatischen Kohlenwasserstoffen, Ketonen und Estern, die substituiert oder nicht substituiert sein können, sowie anorganischen und organischen Säuren und deren wässrige Lösungen, wobei die Behandlungsflüssigkeit gegebenenfalls mindestens ein weiteres Lösungsmittel und/oder eine andere Flüssigkeit umfasst und die Behandlungsflüssigkeit ein azeotropes Gemisch bildet, und wobei der Kunststoff vorzugsweise ausgewählt ist aus thermoplastischen Kunststoffen, wie Acrylnitril-Butadien-Styrol-Copolymer (ABS), Polypropylen (PP), Polycarbonat (PC), Polylactid (PLA), Polyamid (PA), Polyethylenterephthalat (PET) und Polystyrol (PS).

13. Verfahren nach einem der Ansprüche 9 bis 12, wobei der Siedepunkt der Behandlungsflüssigkeit unterhalb des Erweichungspunkts des Kunststoffs liegt.

14. Verfahren nach einem der Ansprüche 9 bis 13, wobei der zu behandelnde Formartikel in einem Vorbehandlungsschritt vor dem Schritt des Aussetzens der erzeugten Dampfphase auf eine vorgegebene Temperatur gebracht wird, wobei die Temperatur vorzugsweise oberhalb des Siedepunkts der Behandlungsflüssigkeit und unterhalb des Erweichungspunkts des Kunststoffs liegt.

15. Verfahren nach einem der Ansprüche 9 bis 14, wobei das Verfahren unter Verwendung der Vorrichtung gemäß einem der Ansprüche 1 bis 8 durchgeführt wird.

## Claims

1. An apparatus for treating a molded article made of plastic with vapor of a treatment liquid, wherein the apparatus comprises:
at least one treatment chamber (1) which is closable and configured to be temperature-controlled for accommodating and treating the molded article,
at least one vapor generating unit for providing a vapor of a treatment liquid, the vapor generating unit being spatially separate from the treatment chamber (1),
at least one fluid connection between the treatment chamber (1) and the vapor generating unit which is configured to be shut off and is suitable for feeding the vapor of the treatment liquid to the treatment chamber (1) and returning condensate back to the treatment chamber, and
a pressure equalizing device for transferring waste air at atmospheric pressure, which device is suitable for enabling pressure equalization with the atmospheric pressure during treatment, and which includes a device for retaining the vapor of the treatment liquid suitable for preventing the escape of the vapor of the treatment liquid into the atmosphere.

2. The apparatus according to claim 1, wherein the treatment chamber (1) comprises a closable opening for loading the treatment chamber with the molded article to the treated, at least one inlet (2) and at least one outlet (3, 4) for the vapor of the treatment liquid, one outlet (5) for condensed treatment liquid, and a heating device (6) as well as a cooling device (7) for controlling the temperature of the interior of the treatment chamber (1), and moreover preferably has an inlet (8) for a purge gas.

3. The apparatus according to any of the preceding claims, wherein the vapor generating unit comprises a container (24) for holding the treatment liquid, a heating device (26) for heating the treatment liquid to a boiling point, a pressure increasing device (33, 50) for increasing the pressure of the vapor of the treatment liquid by a predetermined pressure, and a cooling device (31) for condensing an excess amount of vapor of the treatment liquid.

4. The apparatus according to any of the preceding claims, wherein the at least one fluid connection that is capable of being shut off, comprises devices for feeding the vapor of the treatment liquid from the vapor generating unit to the treatment chamber, for returning the vapor of the treatment liquid from the treatment chamber back to the vapor generating unit, for returning condensed treatment liquid from the treatment chamber back to the vapor generating unit, and for feeding purge gas to the treatment chamber, the devices for feeding and returning including shut-off devices.

5. The apparatus according to any of the preceding claims, wherein the apparatus further comprises a control unit (44, 45) for controlling a flow of the vapor of the treatment liquid between the treatment chamber and the vapor generating unit, for controlling the return of condensed treatment liquid from the treatment chamber to the vapor generating unit and for controlling a temperature of the treatment chamber, and wherein the control unit (44) controls a feeding of the purge gas to the treatment chamber, if need be.

6. The apparatus according to claim 5, wherein the control unit (44) is adapted to:
- control the temperature in the interior of the treatment chamber (1) during a pre-treatment step in order to heat the molded body to be treated up to an initial temperature which is higher than a room temperature,
- control the temperature in the interior of the treatment chamber (1), the flow of the vapor of the treatment liquid between the treatment chamber and the vapor generating unit, and the duration of a treatment step during the treatment step which follows the pre-treatment step, and
- control the temperature in the interior of the treatment chamber (1) and the feeding of purge gas to the treatment chamber (1) during a post-treatment step that follows the treatment step,
and wherein the control unit (44) is adapted, if need be, to feed the purge gas to the treatment chamber in the pre-treatment step.

7. The apparatus according to any of the preceding claims, the apparatus further comprising an operating unit (46) for selecting or setting relevant parameters for treatment of the molded article, and the relevant parameters include in particular the volumetric flow rate of the vapor of the treatment liquid fed to the treatment chamber, the temperature in the interior of the treatment chamber, the duration of treatment of the molded article or of individual treatment steps, and predefined combinations of these parameters.

8. The apparatus according to any of the preceding claims, further comprising a pressure regulating device for regulating a pressure at which the vapor generating unit provides the vapor of the treatment liquid.

9. A method for treating a molded article made of plastic, comprising the steps of
a) generating a vapor phase by heating a treatment liquid to its boiling point, the treatment liquid comprising at least one solvent capable of dissolving or solubilizing the plastic,
b) treatment step in which the molded article to be treated is exposed to the vapor phase generated in step a) for a predetermined treatment time, preferably by supplying the generated vapor of the treatment liquid to the molded article, and
c) removing the molded article from the vapor phase and removing any residual treatment liquid present on the surface of the treated molded article,
**characterized in that**
during treatment, pressure is equalized with atmospheric pressure and the vapor of the treatment liquid is prevented from escaping into the atmosphere.

10. The method according to claim_9, wherein the removal of the molded article from the vapor phase is realized by terminating the supply of vapor of the treatment liquid to the molded article.

11. The method according to claim 9 or 10, wherein the removal of residual treatment liquid present on the surface of the treated molded article in step c) takes place in a post-treatment step in which the temperature to which the molded article is exposed is controlled and, if necessary, a purge gas is supplied to the molded article.

12. The method according to any of claims 9 to 11, wherein the solvent is selected from organic solvents, such as aliphatic or aromatic hydrocarbons, ketones and esters, which may be substituted or unsubstituted, as well as inorganic and organic acids and their aqueous solutions, wherein the treatment liquid possibly comprises at least one further solvent and/or another liquid, and the treatment liquid forms an azeotropic mixture, and wherein the plastic preferably is selected from thermoplastic plastics such as acrylonitrile-butadiene-styrene copolymer (ABS), polypropylene (PP), polycarbonate (PC), polylactides (PLA), polyamide (PA), polyethylene terephthalate (PET) and polystyrene (PS).

13. The method according to any of claims 9 to 12, wherein the boiling point of the treatment liquid is below the softening point of the plastic.

14. The method according to any of claims 9 to 13, wherein the molded article to be treated is brought to a predetermined temperature in a pre-treatment step prior to the step of exposing it to the generated vapor phase, the temperature preferably being above the boiling point of the treatment liquid and below the softening point of the plastic.

15. The method according to any of claims 9 to 14, wherein the method is performed using the device according to any of claims 1 to 8.

## Revendications

1. Dispositif pour traiter un article moulé en matière plastique avec de la vapeur d'un liquide de traitement, dans lequel le dispositif présente :
au moins une chambre de traitement (1) pouvant être fermée et thermorégulée pour loger et traiter l'article moulé,
au moins une unité de génération de vapeur pour fournir de la vapeur de liquide de traitement, dans lequel l'unité de génération de vapeur est séparée spatialement de la chambre de traitement (1),
au moins une connexion fluidique pouvant être arrêtée entre la chambre de traitement (1) et l'unité de génération de vapeur, laquelle est adaptée pour acheminer de la vapeur de liquide de traitement vers la chambre de traitement (1) et renvoyer du condensat, et un appareil d'équilibrage de pression pour transférer de l'air d'évacuation à pression atmosphérique, lequel appareil est adapté pour permettre un équilibrage de pression avec la pression atmosphérique pendant le traitement et qui présente un appareil de rétention de vapeur de liquide de traitement qui est adapté pour empêcher la vapeur de liquide de traitement de s'échapper dans l'atmosphère.

2. Dispositif selon la revendication 1, dans lequel la chambre de traitement (1) présente une ouverture pouvant être fermée pour charger la chambre de traitement avec l'article moulé à traiter, au moins une entrée (2) et au moins une sortie (3, 4) pour la vapeur de liquide de traitement, une sortie (5) pour le liquide de traitement condensé et un appareil de chauffage (6) et un appareil de refroidissement (7) pour thermoréguler l'intérieur de la chambre de traitement (1) et présente en outre de préférence une entrée (8) pour un gaz de rinçage.

3. Dispositif selon l'une quelconque des revendications précédentes, dans lequel l'unité de génération de vapeur présente un récipient (24) pour contenir le liquide de traitement, un appareil de chauffage (26) pour chauffer le liquide de traitement à sa température d'ébullition, un appareil d'augmentation de pression (33, 50) pour augmenter la pression de la vapeur de liquide de traitement d'une pression prédéfinie et un appareil de refroidissement (31) pour condenser la vapeur de liquide de traitement excédentaire.

4. Dispositif selon l'une quelconque des revendications précédentes, dans lequel la au moins une connexion fluidique pouvant être arrêtée comprend des appareils pour acheminer la vapeur de liquide de traitement de l'unité de génération de vapeur vers la chambre de traitement, pour renvoyer la vapeur de liquide de traitement de la chambre de traitement vers l'unité de génération de vapeur, pour renvoyer le liquide de traitement condensé de la chambre de traitement vers l'unité de génération de vapeur et pour acheminer le gaz de rinçage vers la chambre de traitement, dans lequel les appareils d'acheminement et de renvoi présentent des appareils d'arrêt.

5. Dispositif selon l'une quelconque des revendications précédentes, dans lequel le dispositif présente un dispositif de commande (44, 45) pour commander les flux de vapeur de liquide de traitement entre la chambre de traitement et l'unité de génération de vapeur, le renvoi du liquide de traitement condensé de la chambre de traitement vers l'unité de génération de vapeur et pour thermoréguler la température de la chambre de traitement, et le dispositif de commande (44) commande le cas échéant l'apport de gaz de rinçage à la chambre de traitement.

6. Dispositif selon la revendication 5, dans lequel le dispositif de commande (44) est adapté pour
- commander, pendant une étape de prétraitement, la température à l'intérieur de la chambre de traitement (1) pour amener le corps moulé à traiter à une température initiale qui est supérieure à la température ambiante,
- commander, pendant une étape de traitement qui suit l'étape de prétraitement, la température à l'intérieur de la chambre de traitement (1), les flux de vapeur de liquide de traitement entre la chambre de traitement et l'unité de génération de vapeur et la durée de l'étape de traitement, et
- commander, pendant une étape de post-traitement qui suit l'étape de traitement, la température à l'intérieur de la chambre de traitement (1) et l'apport de gaz de rinçage à la chambre de traitement (1),
et dans lequel le dispositif de commande (44) est adapté le cas échéant pour alimenter la chambre de traitement en gaz de rinçage pendant l'étape de prétraitement.

7. Dispositif selon l'une quelconque des revendications précédentes, dans lequel le dispositif présente une unité de commande (46) pour sélectionner ou définir des paramètres pertinents pour le traitement de l'article moulé, et les paramètres pertinents comprennent en particulier le débit volumétrique de vapeur de liquide de traitement alimentée dans la chambre de traitement, la température à l'intérieur de la chambre de traitement, la durée du traitement ou des étapes de traitement individuelles et des combinaisons prédéfinies de ces paramètres.

8. Dispositif selon l'une quelconque des revendications précédentes, avec un appareil de régulation de pression pour réguler la pression avec laquelle l'unité de génération de vapeur fournit la vapeur de liquide de traitement.

9. Procédé de traitement d'un article moulé en matière plastique avec les étapes de
a) génération d'une phase vapeur par chauffage d'un liquide de traitement jusqu'à son point d'ébullition, dans lequel le liquide de traitement comprend au moins un solvant qui est en mesure de dissoudre ou de ramollir la matière plastique,
b) étape de traitement dans laquelle l'article moulé à traiter est exposé à la phase vapeur générée à l'étape a) pendant une durée de traitement prédéfinie, de préférence en ce que la vapeur de liquide de traitement générée est acheminée vers l'article moulé, et
c) retrait de l'article moulé de la phase vapeur et retrait de liquide de traitement résiduel présent à la surface de l'article moulé traité,
**caractérisé en ce que**, pendant le traitement, un équilibrage de pression avec la pression atmosphérique est assuré et la vapeur de liquide de traitement est empêchée de pénétrer dans l'atmosphère.

10. Procédé selon la revendication 9, dans lequel le retrait de l'article moulé de la phase vapeur est réalisé par l'arrêt de l'apport de vapeur de liquide de traitement à l'article moulé.

11. Procédé selon la revendication 9 ou 10, dans lequel le retrait de liquide de traitement résiduel présent à la surface de l'article moulé traité à l'étape c) est effectué dans une étape de post-traitement lors de laquelle la température à laquelle l'article moulé est exposé est commandée et un gaz de rinçage est le cas échéant acheminé vers l'article moulé.

12. Procédé selon l'une quelconque des revendications 9 à 11, dans lequel le solvant est sélectionné parmi des solvants organiques, tels que des hydrocarbures aliphatiques ou aromatiques, cétones et esters, qui peuvent être substitués ou non substitués, ainsi que des acides inorganiques et organiques et leurs solutions aqueuses, dans lequel le liquide de traitement comprend le cas échéant au moins un autre solvant et/ou un autre liquide, et le liquide de traitement forme un mélange azéotropique, et dans lequel la matière plastique est de préférence sélectionnée parmi des plastiques thermoplastiques, tels que le copolymère acrylonitrile-butadiène-styrène (ABS), polypropylène (PP), polycarbonate (PC), polylactide (PLA), polyamide (PA), polyéthylène téréphtalate (PET) et polystyrène (PS).

13. Procédé selon l'une quelconque des revendications 9 à 12, dans lequel le point d'ébullition du liquide de traitement se situe sous le point de ramollissement de la matière plastique.

14. Procédé selon l'une quelconque des revendications 9 à 13, dans lequel l'article moulé à traiter est porté à une température prédéfinie dans une étape de prétraitement avant l'étape d'exposition à la phase vapeur générée, dans lequel la température est de préférence supérieure au point d'ébullition du liquide de traitement et inférieure au point de ramollissement de la matière plastique.

15. Procédé selon l'une quelconque des revendications 9 à 14, dans lequel le procédé est mis en œuvre en utilisant le dispositif selon l'une quelconque des revendications 1 à 8.
